# NEUE EUROPÄISCHE PATENTSCHRIFT

(11) **EP 2 379 402 B2**
(45) Veröffentlichungstag und Bekanntmachung des Hinweises auf die Entscheidung über den Einspruch: **23.08.2017**
(45) Hinweis auf die Patenterteilung: 12.12.2012
(21) Anmeldenummer: 09796326.8
(22) Anmeldetag: 21.12.2009
(51) Int. Cl.: B62M 11/06, B62M 11/14

(54) **GETRIEBEEINHEIT**
TRANSMISSION UNIT
ENSEMBLE TRANSMISSION

(30) Priorität: 22.12.2008 DE 102008064514
(43) Veröffentlichungstag der Anmeldung: 26.10.2011
(73) Patentinhaber: Pinion GmbH, 73770 Denkendorf (DE)
(72) Erfinder: SCHMITZ, Michael, 56412 Niederelbert (DE); LERMEN, Christoph, 70180 Stuttgart (DE)
(74) Vertreter: Witte, Weller & Partner Patentanwälte mbB
(86) Internationale Anmeldenummer: PCT/EP2009/009193
(87) Internationale Veröffentlichungsnummer: WO 2010/072397

(56) Entgegenhaltungen:
- EP-A1- 1 323 672
- EP-A2- 0 383 350
- EP-A2- 1 445 088
- EP-A2- 1 445 088
- WO-A1-2008/089932
- WO-A1-2008/089932
- DE-A1- 3 215 427
- DE-A1- 19 720 794
- DE-A1-102005 053 315
- DE-A1-102005 053 315
- FR-A5- 2 210 973
- US-A- 5 924 950
- US-B1- 56 607 465

## Beschreibung

Die Erfindung betrifft eine Schaltvorrichtung für eine Getriebeeinheit eines mit Muskelkraft betriebenen Fahrzeugs.

Die Erfindung betrifft weiterhin eine Getriebeeinheit für ein mit Muskelkraft betriebenes Fahrzeug.

Die Erfindung betrifft ferner ein Getriebegehäuse für eine Getriebeeinheit eines mit Muskelkraft angetriebenen Fahrzeugs.

Derartige Getriebeeinheiten dienen dazu, Muskelkraft zu über- bzw. zu untersetzen und dadurch das Antreiben des Fahrzeugs zu erleichtern.

Grundsätzlich existieren drei Arten von Gangschaltungen für mit Muskelkraft ange-triebene Fahrzeuge bzw. Fahrräder, und zwar Kettenschaltungen, Nabenschaltungen und Fahrradgetriebe.

Die Kettenschaltung hat sich in den letzten Jahrzehnten im Wesentlichen nicht verändert. Dabei überträgt eine Kette die Antriebskraft von einer Tretkurbel zur Hinterachse des Fahrrades, wobei ein an der Hinterachse montiertes Ritzelpaket mit bis zu 10 Ritzeln montiert ist, zwischen denen mittels eines am Rahmen befestigten Schaltwerks zur Führung der Kette hin- und hergeschaltet werden kann. Weiterhin sind die meisten Fahrräder zusätzlich mit einer Schaltung am Kettenblatt des Tretlagers ausgestattet. Dabei sind bis zu drei Kettenblätter an der Tretkurbel angebracht, zwischen denen mittels eines am Rahmen befestigten Umwerfers hin- und hergeschaltet werden kann. Derartige Kettenschaltungen bieten bis zu 30 Gänge, wobei allerdings systembedingt viele Gänge redundant sind und durch hohe Reibverluste bedingt durch einen diagonalen Kettenverlauf einige Gänge nicht oder nur eingeschränkt nutzbar sind.

Nachteilig bei dem Prinzip der Kettenschaltung ist neben der Vielzahl von redundanten Gängen und den Reibverlusten, dass die Komponenten offenliegen und daher Umwelteinflüssen, wie Wasser und Schmutz, direkt ausgesetzt sind und durch Stöße sehr leicht beschädigt werden können.

Die zweite Art von handelsüblichen Fahrradschaltungen ist die Nabenschaltung. Im Gegensatz zur Kettenschaltung versteht man unter dieser ein in das Nabengehäuse der Hinterachse eingebautes Getriebe. Eine Nabenschaltung weist üblicherweise keine außen liegenden Schaltungskomponenten auf und ist daher stoßunempfindlich und weniger den Umwelteinflüssen ausgesetzt als die Kettenschaltung. Eine Nabenschaltung, wie sie bspw. aus der DE 197 20 794 A1 bekannt ist, kann derzeit bis zu 14 Gänge realisieren. Nachteilig bei dem Prinzip der Nabenschaltung in der Hinterachse ist es, dass das Gewicht der rotierenden Massen erhöht ist und, im Falle von hinterradgefederten Fahrräder, dass die zum Gesamtgewicht relativ gesehene ungefederte Masse erhöht ist. Ferner verlagert sich der Schwerpunkt des Fahrrades in Richtung der Hinterachse, was sich insbesondere bei hinterradgefederten Mountainbikes ungünstig auf die Fahreigenschaften des Fahrrades auswirkt.

Eine derartige Nabenschaltung ist bspw. aus der EP 0 383 350 B1 bekannt, bei der zwei Planetengetriebe koaxial zu einer gehäusefesten Nabe angeordnet sind, wobei die Eingangswelle mit Planetenträgem verbindbar ist und über eine drehbare Schaltvorrichtung die Sonnenräder der Planetengetriebe mit der gehäusefesten Nabe drehfest verbindbar sind, um unterschiedliche Übersetzungsverhältnisse des Gesamtgetriebes zu realisieren. Nachteilig bei diesem Getriebe ist es, dass das Gesamtgetriebe kompliziert ist und demnach zum einen kostenaufwändig in der Herstellung ist und zum anderen durch die hohe Anzahl an Komponenten ein hohes Gewicht bei gleichzeitig geringer Anzahl von realisierbaren Gängen aufweist.

Die dritte Variante der Fahrradschaltungen stellen die im Bereich des Tretlagers montierten Fahrradgetriebe bzw. Tretlagergetriebe dar. Diese Art der Fahrradschaltung ist bei handelsüblichen Fahrrädern nicht oder nur sehr vereinzelt verbreitet. Im Allgemeinen haben derartige Fahrradgetriebe den Vorteil gegenüber herkömmlichen Ketten- oder Nabenschaltungen, dass sie keine offenliegenden Komponenten aufweisen und demnach gegenüber Stößen und Umwelteinflüssen geschützt sind, und zum anderen den Schwerpunkt des Fahrrades in die Mitte verlagern, wobei gleichzeitig die Summe der ungefederten Masse reduziert wird. Dies ist im "Mountainbike-Sport" von besonderem Vorteil. Eine technische Herausforderung bei derartigen Fahrradgetrieben ist es, eine kompakte Bauform bei gleichzeitig einer großen Anzahl von schaltbaren Gängen zu realisieren.

Aus der US 5,924,950 A ist ein Fahrradgetriebe bekannt, mit einer Eingangswelle, an der eine Mehrzahl von Antriebsrädern gelagert ist, und einer Vorgelegewelle, an der eine entsprechende Anzahl von schaltbaren angetriebenen Rädern gelagert ist. Die schaltbaren Räder der Vorgelegewelle werden mittels mehrerer, in der Vorgelegewelle angeordneten, axial verschiebbaren Schaltbolzen und Freiläufen geschaltet, wobei die Vorgelegewelle über ein Planetengetriebe mit einem Ritzel als Ausgangsglied des Fahrradgetriebes verbunden ist. Das Ritzel ist über eine Kupplung mit dem Sonnenrad des Planetengetriebes verbunden und das Hohlrad des Planetengetriebes kann mittels eines Baudenzuges gebremst werden. Durch dieses Fahrradgetriebe lassen sich 14 Gänge realisieren. Nachteilig bei diesem System ist die axial große Bauform und die vergleichsweise geringe Anzahl von 14 realisierbaren Gängen.

Ferner ist aus der WO 2008/089932 A1 eine Getriebeeinheit für Fahrräder bekannt, bei der über zwei Vorgelegewellen und ein weiteres Teilgetriebe eine hohe Anzahl von Gängen durch die Multiplikation der Einzelgänge der beiden Teilgetriebe realisierbar ist und gleichzeitig eine kompakte Bauform realisiert werden kann. Nachteilig bei dieser Getriebeeinheit ist es, dass zum Schalten der Losräder eine Nockenwelle axial verschoben wird und das Getriebe dadurch in axialer Richtung einen hohen Platzbedarf hat.

Aus der EP 144 5 088 ist eine Schaltvorrichtung mit den Merkmalen des Oberbegriffes des Anspruchs 1 bekannt.

Es ist daher die Aufgabe der vorliegenden Erfindung, eine verbesserte Getriebeeinheit, eine verbesserte Schaltvorrichtung und ein verbessertes Getriebegehäuse für ein mit Muskelkraft betriebenes Fahrzeug bereitzustellen, wodurch eine kompaktere Bauform und eine große Anzahl von Gängen bei gleichzeitig reduziertem Gewicht realisierbar ist.

Diese Aufgabe wird gemäß Anspruch 1 der Erfindung gelöst durch eine Schaltvorrichtung für eine Getriebeeinheit eines mit Muskelkraft betriebenen Fahrzeugs mit einer ersten Welle, an der eine Mehrzahl von Losrädern gelagert ist, einer entsprechenden Anzahl von Zahnrädern, die an wenigstens einer zweiten Welle gelagert sind, wobei die Losräder jeweils mittels Schaltmitteln mit der ersten Welle verbindbar sind, wobei die erste Welle als Hohlwelle ausgebildet ist und einen oder - zwei koaxial innenliegende Schaltbolzen aufweist, wobei der oder die Schaltbolzen jeweils mit Antriebsmitteln verbunden ist oder sind, die dazu ausgelegt, sind, den oder die Schaltbolzen zu rotieren, um die Schaltmittel zu betätigen, wobei die Schaltmittel als schaltbare Freiläufe ausgebildet sind und an dem oder den Schaltbolzen Betätigungsabschnitteausgebildet sind, mittels derer die Freiläufe betätigbar sind, wobei die Betätigungsabschnitte an dem oder den Schaltbolzen derart angeordnet sind, dass die Freiläufe von zwei aufeinanderfolgenden Gangstufen gleichzeitig betätigbar sind.

Ein Vorteil der Erfindung ist, dass die Schaltbolzen eine axial kompakte Bauform der Getriebeeinheit ermöglichen, weil die Schaltbolzen zum Betätigen der Schaltmittel in der zweiten Welle rotiert werden.

Die Aufgabe der vorliegenden Erfindung wird somit vollständig gelöst.

Bei der Erfindung ist es bevorzugt, wenn die Antriebsmittel dazu ausgelegt sind, den entsprechenden Schaltbolzen synchron zu der ersten Welle zu rotieren, um einen Schaltzustand beizubehalten und den Schaltbolzen relativ zu der ersten Welle zu rotieren, um einen Gangwechsel auszuführen.

Dadurch kann der Schaltbolzen durch eine Relativbewegung die Schaltmittel betätigen und einzelne der Losräder mit der ersten Welle drehfest verbinden.

Ferner ist es vorteilhaft, wenn die zwei Schaltbolzen unabhängig voneinander rotierbar sind. Dadurch können die Losräder unabhängig geschaltet werden, wodurch eine hohe Anzahl von Gängen realisierbar ist.

Dadurch kann der Schaltbolzen synchron zu der ersten Welle rotiert werden und eine zweite Drehbewegung einfach überlagert werden.

Dadurch ist eine einfache und kompakte Bauform des Drehzahlüberlagerungsgetriebes möglich.

Vorzugsweise ist das Planetengetriebe als Stufenplanetengetriebe ausgebildet. Dadurch ist eine besonders kompakte Bauform möglich.

Dabei ist es bevorzugt, wenn die erste Welle drehfest mit einem Sonnenrad des Planetengetriebes und der Schaltbolzen drehfest mit einem Planetenträger des Planetengetriebes verbunden ist.

Dadurch lässt sich die Rotation der ersten Welle mit geringem Aufwand auf den Schaltbolzen übertragen.

Dabei ist es weiterhin vorteilhaft, wenn eine Rotation eines Hohlrades des Planetengetriebes als Rotation des Schaltbolzens relativ zu der Welle übertragbar ist.

Dadurch lässt sich mit einfachen mechanischen Mitteln eine Drehung relativ zu der Welle auf den Schaltbolzen übertragen.

Im Allgemeinen ist es bevorzugt, wenn die Rotation der ersten Welle mittels eines Konstanten-Radsatzes auf das Sonnenrad des Planetengetriebes übertragbar ist.

Weiterhin ist es bevorzugt, wenn die Rotation des Planetenträgers des Planetengetriebes mittels eines Konstanten-Radsatzes auf den Schaltbolzen übertragbar ist.

Durch diese Anordnung ist die komplizierte Relativdrehung des Schaltbolzens in der ersten Welle mit mechanisch einfachen Mitteln realisierbar. Vorzugsweise sind die Konstanten-Radsätze und das Planetengetriebe so ausgelegt, dass der Schaltbolzen und die erste Welle mit derselben Drehgeschwindigkeit rotieren, wenn das Hohlrad des Planetengetriebes relativ zu dem Getriebegehäuse festgelegt ist bzw. gehalten wird.

Vorzugsweise wird die Drehbewegung des Hohlrades mittels einer Zugscheibe ausgeführt. Die Zugscheibe wird vorzugsweise durch einen Baudenzug betätigt. Die Zugscheibe übersetzt die von dem Baudenzug ausgeführt Zugbewegung in eine Rotationsbewegung des Hohlrades.

Vorzugsweise sind die Schaltmittel als schaltbare Freiläufe ausgebildet.

Dadurch können die Losräder mit einfachen und kompakten Schaltmitteln schaltbar an der ersten Welle gelagert werden.

Dabei ist es bevorzugt, wenn die Freiläufe Schaltklinken aufweisen, die mit einer Innenverzahnung der Losräder in Eingriff bringbar sind.

Dadurch lassen sich einfach betätigbare Freiläufe realisieren, die ein großes Drehmoment aufnehmen können, weil sie Kraft in tangentialer Richtung von dem Losrad auf die erste Welle übertragen.

Ferner ist es bevorzugt, wenn der Schaltbolzen Betätigungsabschnitte aufweist, mittels derer die Freiläufe betätigbar sind.

Dadurch lassen sich die Freiläufe durch eine konstruktiv einfache Maßnahme mit den Losrädern in Eingriff bringen.

Dabei ist es bevorzugt, wenn die Betätigungsabschnitte als Ausnehmungen in dem Schaltbolzen ausgebildet sind.

Dadurch können Betätigungsabschnitte der Schaltklinken nach innen hin ausschwenken, so dass die eigentliche Schaltklinke nach radial außen schwenkt und mit der Innenverzahnung der Losräder in Eingriff bringbar ist. Dadurch lässt sich eine Welle mit geringem Durchmesser realisieren.

Alternativ ist es bevorzugt, wenn die Betätigungsabschnitte erhaben ausgebildet sind.

Dadurch können die Schaltklinken direkt nach radial außen gedrückt werden und es kann auf Vorspannvorrichtungen wie z.B. Federn verzichtet werden.

Dadurch ist es möglich, ein Lastschaltgetriebe zu realisieren, weil der Freilauf des höheren Ganges mit dem entsprechenden Losrad in Eingriff gebracht wird, während der Freilauf des niedrigeren Ganges freiläuft.

Weiterhin ist es bevorzugt, wenn jedem Losrad eine Mehrzahl von Freilaufklinken zugeordnet ist.

Dadurch kann ein höheres Drehmoment von dem Losrad auf die Welle übertragen werden und es besteht kein Verletzungsrisiko bei einem Freilaufiklinkenbruch, weil wenigstens eine weitere Freilaufklinke das Drehmoment kurzfristig übertragen kann.

Weiterhin ist es bevorzugt, wenn die Freilaufklinken eines Freilaufs derart über den Umfang der Welle verteilt sind, dass nur eine der Freilaufklinken gleichzeitig mit dem Losrad in Eingriff bringbar ist.

Dadurch nimmt der Drehwinkel des schaltbaren Losrades bis zum Einrasten der Schaltklinke in die Innenverzahnung ab, wodurch der Fahrkomfort gesteigert ist.

Weiterhin ist es bevorzugt, wenn die Betätigungsabschnitte derart ausgebildet sind, dass nur entsprechend geformte Freiläufe betätigbar sind.

Dadurch können bestimmte Betätigungsabschnitte lediglich bestimmte Freiläufe betätigen, wodurch eine größere Anzahl unterschiedlicher Freiläufe mittels eines Schaltbolzens betätigbar sind.

Allgemein ist es bevorzugt, wenn der Schaltbolzen axial verschieblich ausgebildet ist.

Dadurch kann der nutzbare Drehbereich der Schaltbolzen vergrößert werden.

Alternativ ist es bevorzugt, dass die Antriebsmittel einen elektrischen Aktuator aufweisen.

Dadurch kann auf Zahnräder zum Antreiben des Schaltbolzens verzichtet werden, wodurch eine weitere Reduzierung des Gewichts möglich ist.

Dabei ist es bevorzugt, wenn ein Stator des elektrischen Aktuators drehfest mit der ersten Welle verbunden ist.

Dadurch kann auf zusätzliche Rotationsmittel verzichtet werden, um den elektrischen Aktuator synchron zu der ersten Welle zu rotieren.

Dabei ist es bevorzugt, wenn der elektrische Aktuator in der ersten Welle angeordnet ist.

Dadurch ist eine kompakte Bauform der Getriebeeinheit möglich.

Weiterhin ist es bevorzugt, wenn der elektrische Aktuator als Elektromotor und besonders bevorzugt als Schrittmotor ausgebildet ist.

Dadurch kann eine Relativbewegung des Schaltbolzens in Bezug auf die zweite Welle mit einer einfachen Steuerung realisiert werden

Alternativ ist es bevorzugt, wenn die Antriebsmittel einen hydraulischen Aktuator aufweisen.

Dadurch kann der Schaltbolzen betätigt werden, ohne dass zusätzlich elektrische Energie bereitgestellt werden muss.

Dabei ist es bevorzugt, wenn der hydraulische Aktuator einen Hydraulikgeber aufweist, der drehfest mit einem Getriebekäfig verbunden ist.

Dadurch kann hydraulischer Druck dem hydraulischen Aktuator ohne aufwändige Drehdurchführungen zugeführt werden.

Ferner ist es bevorzugt, wenn der hydraulische Aktuator einen Hydrauliknehmer aufweist, der relativ zu dem Hydraulikgeber drehbar gelagert ist.

Dadurch lässt sich der hydraulische Druck einfach auf rotierende Bauteile übertragen.

Dabei ist es bevorzugt, wenn der Hydrauliknehmer ein erstes Nehmerbauteil aufweist, das drehfest mit der ersten Welle verbunden ist.

Dadurch kann sich ein Teil des Hydrauliknehmers an der ersten Welle abstützen und den Schaltbolzen mit der Rotationsgeschwindigkeit der ersten Welle rotieren.

Weiterhin ist es bevorzugt, wenn der Hydrauliknehmer ein zweites Nehmerbauteil aufweist, das drehfest mit dem Schaltbolzen verbunden ist.

Dadurch kann das zweite Nehmerbauteil eine Drehbewegung des Schaltbolzens relativ zu der ersten Welle übertragen.

Weiterhin ist es bevorzugt, wenn das erste und das zweite Nehmerbauteil wenigstens einen Nehmerzylinder bilden, und wobei das zweite Nehmerbauteil wenigstens einen Nehmerkolben bildet.

Dadurch kann hydraulischer Druck, der in dem Nehmerzylinder aufgebaut wird, den Nehmerkolben betätigen und eine Relativdrehung des Schaltbolzens zu der zweiten Welle ausführen.

Dabei ist es bevorzugt, wenn der Nehmerkolben in Umfangsrichtung beweglich gelagert ist.

Dadurch sind keine weiteren mechanischen Mittel nötig, um die Bewegung des Nehmerkolbens in eine Drehbewegung zu übersetzen.

Weiter ist es bevorzugt, wenn der Nehmerzylinder als doppelt wirkender Zylinder ausgebildet ist.

Dadurch kann durch einfache Umkehr des beaufschlagten Hydraulikdrucks die Drehrichtung des Nehmerkolbens umgekehrt werden.

Weiterhin ist es bevorzugt, wenn das erste Nehmerbauteil und das zweite Nehmerbauteil wenigstens zwei Nehmerkolben bilden.

Dadurch kann eine höhere Kraft auf den Schaltbolzen ausgeübt werden.

Dabei ist es bevorzugt, wenn die zwei Nehmerzylinder eine Reihenschaltung bilden. Dadurch ist es möglich, dass zunächst ein Kolben betätigt wird und den Schaltbolzen in eine erste Rotationsposition bewegt, und danach durch weiteres Erhöhen des Hydraulikdrucks der zweite Nehmerkolben betätigt wird, um den Schaltbolzen in eine zweite Rotationsposition zu drehen. Ferner kann der nutzbare Drehbereich des Schaltbolzens vergrößert werden.

Weiterhin ist es bevorzugt, wenn der Schaltbolzen eine Rastvorrichtung aufweist, die den Schaltbolzen in unterschiedlichen Rotationspositionen in der ersten Welle festlegt.

Dadurch kann reproduzierbar eine genaue Rotationsposition des Schaltbolzens in der ersten Welle realisiert werden, die durch einen erhöhten Kraftaufwand gelöst werden muss.

Weiterhin ist es bevorzugt, wenn der Schaltbolzen relativ zu dem zweiten Nehmerbauteil axial beweglich gelagert ist.

Dadurch kann eine weitere Schaltfunktion durch axiales Bewegen des Schaltbolzens realisiert werden.

Ferner ist es bevorzugt, wenn der Schaltbolzen einen Betätigungsabschnitt aufweist, mittels dessen eine Kupplung eines separaten Teilgetriebes betätigbar ist.

Dadurch lassen sich zwei in Reihe geschaltete Getriebe mit einem Schaltbolzen schalten, wodurch der Schaltkomfort erhöht ist.

Weiter ist es bevorzugt, wenn die Vorgelegewelle des ersten Teilgetriebes und die Eingangswelle des zweiten Teilgetriebes koaxial zueinander angeordnet sind.

Dadurch ist eine Kraftübertragung von der Vorgelegewelle auf die Eingangswelle des zweiten Teilgetriebes mit geringem konstruktiven Aufwand möglich.

Dabei ist es weiterhin vorteilhaft, wenn die Vorgelegewelle des ersten Teilgetriebes mit einem Planetenradsatz des Umlaufrädergetriebes drehfest verbindbar ist.

Dadurch lässt sich eine weitere Gangstufe mit konstruktiv einfachen Mitteln realisieren.

Weiterhin ist es bevorzugt, wenn ein Hohlrad des Umlaufrädergetriebes mit der Eingangswelle des zweiten Teilgetriebes drehfest verbindbar ist.

Dadurch lässt sich mit einfachen Mitteln ein Abtrieb des Planetengetriebes realisieren.

Weiterhin ist es bevorzugt, wenn ein Sonnenrad des Umlaufrädergetriebes mit einem Getriebegehäuse der Getriebeeinheit mittels einer Kupplung drehfest verbindbar ist.

Dadurch lässt sich mit einfachen konstruktiven Mitteln ein weiterer Gang des Umlaufrädergetriebes realisieren.

Weiterhin ist es bevorzugt, wenn die Eingangswelle des ersten Teilgetriebes als Durchgangswelle ausgebildet ist, die auf entgegengesetzten Seiten mit Kurbeln zum Antreiben des Fahrzeugs verbindbar ist.

Dadurch kann auf weitere Zahnräder verzichtet werden, die das Eingangsdrehmoment der Getriebeeinheit auf die Eingangswelle des ersten Teilgetriebes überträgt.

Weiterhin ist es bevorzugt, wenn die Ausgangswelle als Hohlwelle ausgebildet ist, die koaxial zu der Durchgangswelle angeordnet ist.

Dadurch ist eine kompakte Bauform möglich und dadurch kann das Ritzel in kompakter Bauform koaxial zum Tretlager des Fahrrades angeordnet werden.

Weiterhin ist es bevorzugt, wenn das Umlaufrädergetriebe um eine Drehachse rotiert, die zu der Eingangswelle parallel versetzt angeordnet ist.

Dadurch kann eine axial kompakte Bauform der Getriebeeinheit realisiert werden.

Allgemein ist es bevorzugt, wenn die Eingangswelle mit der Ausgangswelle mittels einer Kupplung wenigstens in einer Drehrichtung drehfest verbindbar ist. Dadurch kann mit einfachen Mitteln ein weiterer Gang der Getriebeeinheit als Direktgang realisiert werden.

Weiterhin ist es bevorzugt, wenn die zweiten Antriebsräder des zweiten Teilgetriebes als Losräder ausgebildet sind, die mittels Schaltmitteln mit der Eingangswelle drehfest verbindbar sind.

Dadurch ist das zweite Teilgetriebe mit geringem konstruktivem Aufwand schaltbar, weil die Vorgelegewelle an seinen axialen Enden nicht mit Antriebsmitteln wie z.B. Tretkurbeln verbunden ist.

Generell ist es bevorzugt eine der erfindungsgemäßen Getriebeeinheiten mit der erfindungsgemäßen Schaltvorrichtung zu kombinieren. Dadurch lässt sich ein insgesamt kompaktes Fahrradgetriebe realisieren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Seitenansicht eines Fahrradrahmens mit einem Mehrgang-Getriebe;
- Fig. 2: eine Explosionsdarstellung eines Getriebegehäuses mit einem Mehrgang-Getriebe;
- Fig. 3: einen Schaltplan eines Mehrgang-Getriebes mit zwei Teilgetrieben und einer gemeinsamen Vorgelegewelle;
- Fig. 4: einen Schaltplan einer Schaltvorrichtung mit drehbarem Schaltbolzen;
- Fig. 5: einen Schaltplan einer Schaltvorrichtung mit zwei drehbaren Schaltbolzen;
- Fig. 6: einen Schaltplan einer Getriebeeinheit mit einem Planetengetriebe;
- Fig. 7: eine perspektivische Darstellung einer Ausführungsform einer Getriebeeinheit mit zwei Teilgetrieben und einer gemeinsamen Vorgelegewelle;
- Fig. 8: eine perspektivische Darstellung eines Losrades mit Innenverzahnung;
- Fig. 9: eine perspektivische Darstellung einer Schaltklinke;
- Fig. 10: eine perspektivische Explosionsdarsfeltung einer Welle zur Lagerung von schaltbaren Losrädern mit drehbarem Schaltbolzen;
- Fig. 11: eine perspektivische Darstellung einer Welle mit Schaltklinken und drehbarem Schaltbolzen;
- Fig. 12 A-F:: Prinzipskizzen zur Erläuterung von Schaltvorgängen mit drehbarem Schaltbolzen;
- Fig. 13: eine Explosionsdarstellung einer Welle mit drehbarem Schaltbolzen und einem Planetengetriebe zum Rotieren des Schaltbolzens;
- Fig. 14:: eine perspektivische Darstellung der Welle und der Schaltvorrichtung gemäß Fig. 13;
- Fig. 15:: eine Explosionsdarstellung eines drehbaren Schaltbolzens mit einer Kupplung des Planetengetriebes;
- Fig. 16:: eine Explosionsdarstellung des Planetengetriebes mit Schaltgabel;
- Fig. 17:: eine perspektivische Darstellung der Schaltung mit drehbarem Schaltbolzen und schaltbarem Planetengetriebe;
- Fig. 18:: eine schematische Seitenansicht der Schaltvorrichtung mit drehbarem Schaltbolzen und schaltbarem Planetengetriebe;
- Fig. 19:: eine schematische Schnittdarstellung einer Getriebeeinheit mit drehbarem Schaltbolzen und Planetengetriebe;
- Fig. 20 A-C:: Prinzipskizzen zur Erläuterung der Funktionsweise von zwei in Reihe geschalteten Hydraulikzylindern;
- Fig. 21:: eine Prinzipskizze zur Erläuterung eines doppeltwirkenden Hydraulikzylinders;
- Fig. 22:: eine Explosionsdarstellung einer Hydraulikeinheit zur Betätigung des drehbaren Schaltbolzens;
- Fig. 23:: eine schematische Schnittansicht einer Welle mit Schaltbolzen und Hydraulikeinheit nach Fig. 22;
- Fig. 24:: eine perspektivische Darstellung der Hydraulikeinheit zur Betätigung des drehbaren Schaltbolzens;
- Fig. 25:: eine Schnittansicht des Schaltbolzens aus Fig. 23 geschnitten entlang der Linie B-B;
- Fig. 26:: eine Schnittansicht eines Schaltbolzens mit Hydraulikeinheit geschnitten entlang der Linie C-C aus Fig. 25;
- Fig. 27:: eine Schnittansicht einer Rastvorrichtung des Schaltbolzens geschnitten entlang der Linie A-A aus Fig. 23;
- Fig. 28:: eine Explosionsdarstellung eines Getriebegehäuses zur Aufnahme einer Getriebeeinheit;
- Fig. 29: einen Schaltplan einer Schaltvorrichtung mit zwei drehbaren Schaltbolzen;
- Fig. 30: eine Explosionsdarstellung der Schaltvorrichtung gemäß Fig. 29.

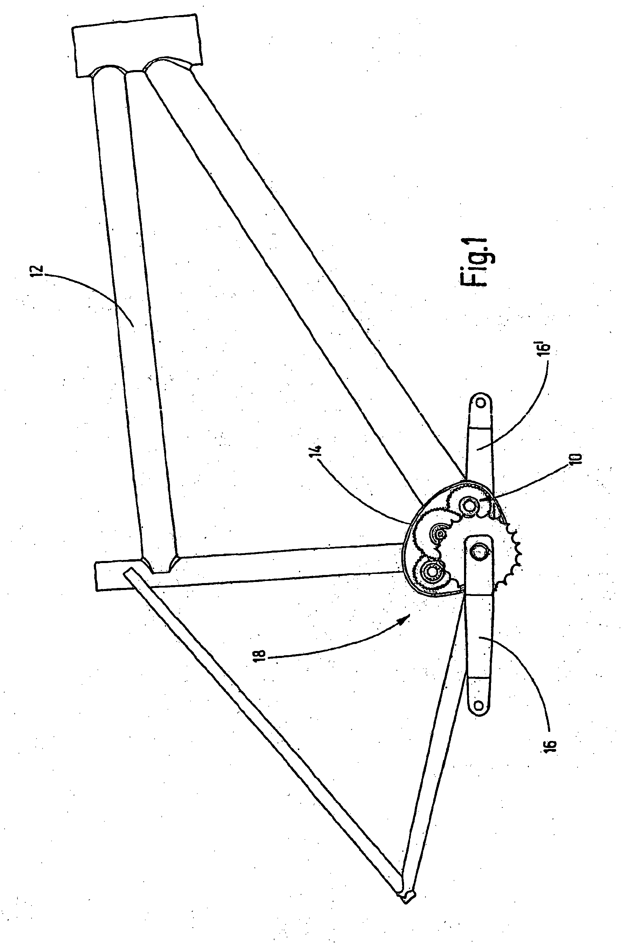

In Fig. 1 ist eine Getriebeeinheit allgemein mit 10 bezeichnet.

Fig. 1 zeigt eine Seitenansicht eines Fahrradrahmens 12, der ein Getriebegehäuse 14 aufweist, in dem die Getriebeeinheit 10 aufgenommen ist. Die Getriebeeinheit 10 ist in dieser Darstellung nur schematisch angedeutet und ist als kompakte Einheit ausgebildet, die vorzugsweise in einem hier nicht dargestellten Getriebekäfig angeordnet ist. Die Getriebeeinheit 10 wird hierin beispielhaft für den Einsatz bei einem Fahrrad beschrieben, wobei allerdings auch der Einsatz bei anderen mit Muskelkraft betriebenen Fahrzeugen möglich ist. Ferner ist es auch denkbar, die Getriebeeinheit 10 für Fahrzeuge zu verwenden, bei denen Muskelkraft in Kombination mit einer Antriebsmaschine zum Antreiben des Fahrzeugs verwendet wird.

Die Getriebeeinheit 10 und das Getriebegehäuse 14 bilden zusammen mit Tretkurbeln 16 und 16' ein Mehrgang-Getriebe 18.

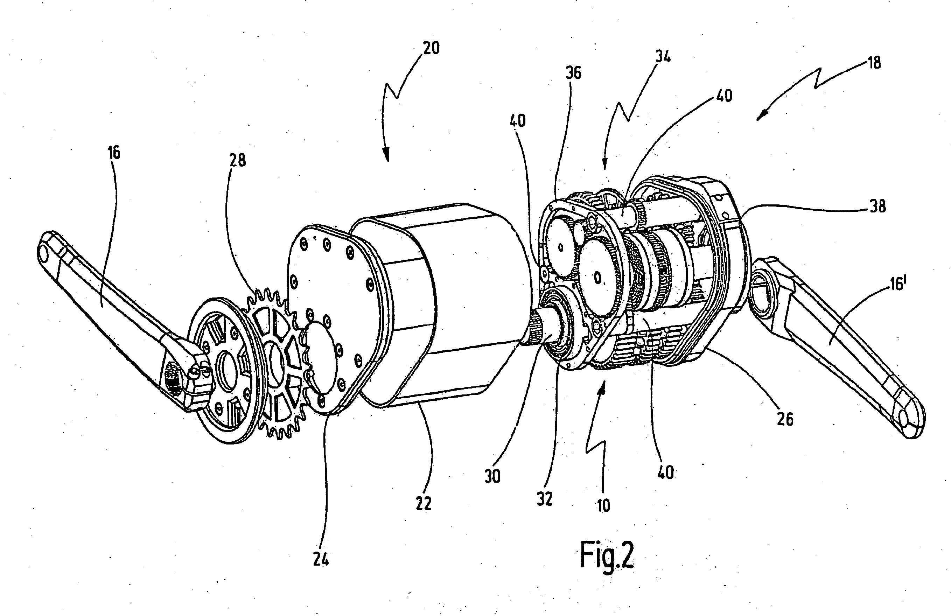

Fig. 2 zeigt eine Explosionsdarstellung des Mehrgang-Getriebes 18. Gleiche Teile sind mit gleichen Bezugszeichen versehen, so dass insofern auf die Beschreibung zu Fig. 1 verwiesen wird.

Das Mehrgang-Getriebe 18 weist ein Getriebegehäuse 20 auf, das gebildet ist durch einen Gehäusemantel 22 und zwei Gehäusedeckel 24, 26, die den Gehäusemantel 22 an seinen axialen Enden verschließen. Das Mehrgang-Getriebe 18 weist ferner ein Kettenblatt 28 auf, das mittels einer nicht dargestellten Kette ein durch die Getriebeeinheit 10 über- bzw. untersetztes Drehmoment zu einem nicht dargestellten Hinterrad des Fahrrades überträgt.

Die Tretkurbeln 16, 16' sind mit einer Eingangswelle 30 der Getriebeeinheit 10 verbindbar und bilden den Drehmomenteingang für das Mehrgang-Getriebe 18. Das Kettenblatt 28 ist mit einer Ausgangswelle 32 der Getriebeeinheit 10 verbunden und bildet den Ausgang des Mehrgang-Getriebes 18. Die Eingangswelle 30 und die Ausgangswelle 32 sind koaxial zueinander angeordnet.

In dem Getriebegehäuse 20 ist vorzugsweise ein Getriebekäfig 34 angeordnet. Der Getriebekäfig 34 dient zur Aufnahme mehrerer Getriebewellen, Lager, Schaltmittel, Zahnräder, sowie Zuführungen und sonstiger Bauteile des Mehrgang-Getriebes 18.

Der Getriebekäfig 20 weist vorzugsweise zwei Lagerplatten 36, 38 auf, die mittels einer Mehrzahl von Bolzen 40 miteinander verbunden sind. Die Lagerplatten weisen Lager auf, an denen Wellen drehbar gelagert sind. An den Wellen sind Zahnräder der Getriebeeinheit 10 gelagert.

Alternativ können die Bolzen 40 und die Wellen der Getriebeeinheit 10 an den Gehäusedeckeln 24, 26 gelagert sein, so dass zur Gewichts- und Platzersparnis auf gesonderte Lagerplatten 36, 38 verzichtet werden kann.

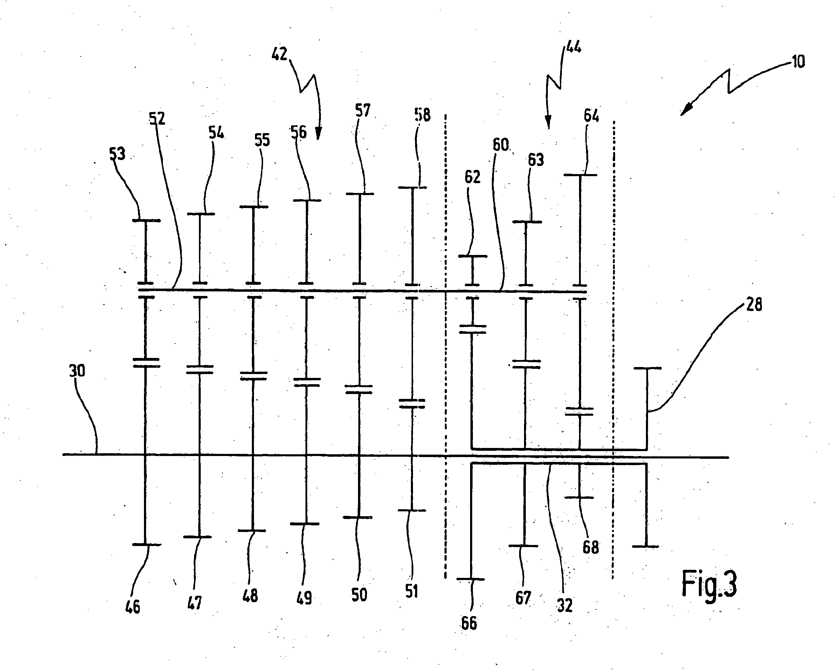

Fig. 3 zeigt einen Schaltplan der Getriebeeinheit 10.

Die Getriebeeinheit 10 weist die Eingangswelle 30 und die Ausgangswelle 32 auf. Die Eingangswelle 30 ist als Durchgangswelle ausgebildet. Die Ausgangswelle 32 ist als Hohlwelle ausgebildet. Die Eingangswelle 30 und die Ausgangswelle 32 sind koaxial zueinander angeordnet. Die Ausgangswelle 32 ist mit dem Kettenblatt 28 drehfest verbunden, das ein Ausgangsglied der Getriebeeinheit 10 bildet.

Die Getriebeeinheit 10 weist ein erstes Teilgetriebe 42 und ein zweites Teilgetriebe 44 auf. An der Eingangswelle 30 ist eine Mehrzahl von Antriebsrädern 46, 47, 48, 49, 50, 51 gelagert. Das erste Teilgetriebe 42 weist eine Vorgelegewelle 52 auf. An der Vorgelegewelle 52 sind angetriebene Räder 53, 54, 55, 56, 57, 58 gelagert. Die angetriebenen Räder 53, 54, 55, 56, 57, 58 sind als Losräder ausgebildet.

Die angetriebenen Räder 53 bis 58 sind mittels nicht dargestellten Schaltmitteln mit der Vorgelegewelle 52 verbindbar. Die angetriebenen Räder 53 bis 58 und die Antriebsräder 46 bis 51 bilden Radpaare, die unterschiedliche Übersetzungen aufweisen, so dass durch selektives Verbinden der angetriebenen Räder 53 bis 58 mit der Vorgelegewelle 52 unterschiedliche Gangstufen realisiert werden können.

Das zweite Teilgetriebe 44 weist eine Eingangswelle 60 auf. An der Eingangswelle 60 sind Antriebsräder 62, 63, 64 gelagert. Die Antriebsräder 62, 63, 64 sind als Losräder ausgebildet. Die Antriebsräder 62, 63, 64 sind mittels Schaltmitteln mit der Eingangswelle 60 drehfest verbindbar. An der Ausgangswelle 32 sind die angetriebenen Räder 66, 67, 68 gelagert. Die angetriebenen Räder 66, 67, 68 stehen in kämmendem Eingriff mit den Antriebsrädern 62, 63, 64.

Durch die miteinander kämmenden angetriebenen Räder 66, 67, 68 und Antriebsräder 62, 63, 64 werden Radpaare gebildet, die unterschiedliche Übersetzungen aufweisen. Die Antriebsräder 62, 63, 64 sind mittels nicht dargestellten Schaltmitteln mit der Eingangswelle 60 drehfest verbindbar, wodurch unterschiedliche, wählbare Gangstufen des zweiten Teilgetriebes 44 gebildet werden.

Die Vorgelegewelle 52 des ersten Teilgetriebes 42 ist drehfest mit der Eingangswelle des zweiten Teilgetriebes 44 verbunden. Vorzugsweise ist die Vorgelegewelle 52 mit der Eingangswelle 60 einstückig ausgebildet.

Dadurch, dass das erste Teilgetriebe 42 mit dem zweiten Teilgetriebe 44 verbunden ist, multiplizieren sich die möglichen realisierbaren Gangstufen des ersten Teilgetriebes 42 mit den Gangstufen des zweiten Teilgetriebes 44. Somit sind durch die in Fig. 3 dargestellte Getriebeeinheit 10 achtzehn Gänge realisierbar.

Weiterhin ist es denkbar, dass die Eingangswelle 30 mittels einer nicht dargestellten Kupplung mit der Ausgangswelle 32 drehfest verbindbar ist. Dadurch wäre ein weiterer Gang als Direktgang realisierbar.

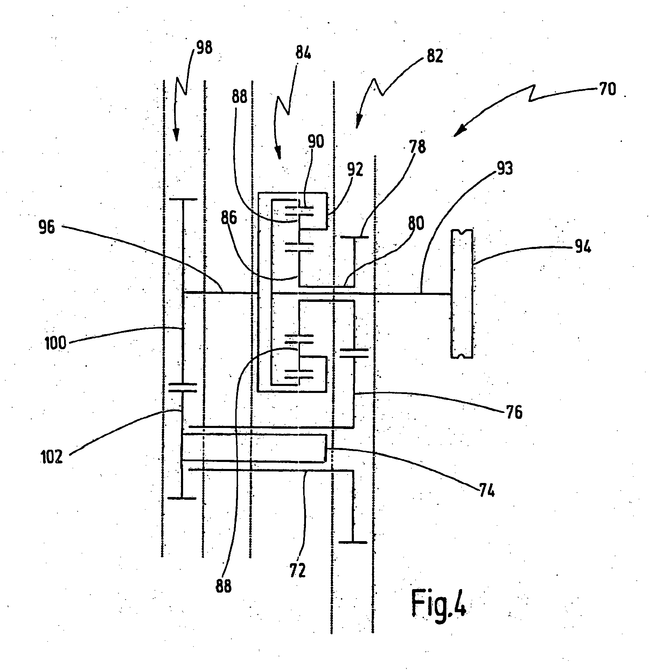

In Fig. 4 ist eine Schaltvorrichtung zum Rotieren eines drehbaren Schaltbolzens generell mit 70 bezeichnet. Die Schaltvorrichtung 70 dient dazu, auf einer Welle 72 gelagerte, nicht dargestellte Losräder mittels nicht dargestellten Schaltmitteln mit der Welle 72 drehfest zu verbinden. Die Schaltvorrichtung 70 weist einen Schaltbolzen 74 auf, der koaxial in der als Hohlwelle ausgebildeten Welle 72 drehbar gelagert ist. Der Schaltbolzen 74 ist so ausgebildet, dass in einer bestimmten Rotationsposition relativ zu der Welle 72 bestimmte Schaltmittel betätigt werden, so dass wenigstens eines der Losräder wenigstens in einer Drehrichtung drehfest mit der Welle 72 verbunden ist. Die in Fig. 4 dargestellte Schaltvorrichtung 70 dient im Allgemeinen dazu, die Drehposition des Schaltbolzens 74 relativ zu der rotierenden Welle 72 entweder zu halten, um die eingelegte Gangstufe beizubehalten oder die Drehposition gezielt zu verändern, um die Gangstufe zu wechseln.

Die Welle 72 ist mit einem Antriebsrad 76 drehfest verbunden. Das Antriebsrad 76 ist mit einem angetriebenen Rad 78 drehfest verbunden, das an einer Nebenwelle 80 gelagert ist. Das Antriebsrad 76 und das angetriebene Rad 78 bilden ein erstes Übertragergetriebe 82.

Die Schaltvorrichtung 70 weist ferner ein Drehzahlüberlagerungsgetriebe 84 bzw. ein Summationsgetriebe 84 auf, das vorzugsweise als Planetengetriebe 84 ausgebildet ist. Das Planetengetriebe 84 weist ein Sonnenrad 86, Planetenräder 88 und ein Hohlrad 90 auf. Das Sonnenrad 86 ist drehfest mit dem angetriebenen Rad 78 des Übertragergetriebes 82 verbunden. Die Planetenräder 88 sind mittels eines Planetenträgers 92 gelagert. Die Planetenräder 88 kämmen mit einer Innenverzahnung des Hohlrades 90 und mit einer Außenverzahnung des Sonnenrades 86. Das Hohlrad ist mit einer Hohlradwelle 93 drehfest verbunden. Die Hohlradwelle 93 ist mit einer Zugscheibe 94 verbunden. Der Planetenträger 92 ist drehbar gelagert und drehfest verbunden mit einer Abtriebswelle 96. Die Nebenwelle 80 und die Abtriebswelle 96 sind koaxial zueinander angeordnet. Das Sonnenrad 86 und das Hohlrad 90 sind koaxial zu der Nebenwelle 80 angeordnet. Die Nebenwelle 80 ist parallel versetzt zu der Welle 72 angeordnet. Die Hohlradwelle 93 ist koaxial zu der Nebenwelle 80 angeordnet. Die Hohlradwelle 93 kann alternativ auch parallel versetzt zu der Nebenwelle 80 angeordnet sein und mit einer Außenverzahnung des Hohlrades 90 kämmen.

Die Abtriebswelle 96 ist über ein zweites Übertragergetriebe 98 mit dem Schaltbolzen 74 drehfest verbunden. Das Übertragergetriebe 98 weist einen Konstanten-Radsatz auf, der gebildet ist durch ein Antriebsrad 100 und ein angetriebenes Rad 102. Das Antriebsrad 100 ist an der Abtriebswelle 96 drehfest gelagert und das angetriebene Rad 102 ist drehfest mit dem Schaltbolzen 74 verbunden.

Die Übersetzung des ersten Übertragergetriebes 82, des Planetengetriebes 84 und des zweiten Übertragergetriebes 98 ist so gewählt, dass sich ein Gesamtübersetzungsverhältnis dieser drei hintereinander geschalteten Teilgetriebe von 1 ergibt, wenn das Hohlrad relativ zu dem Getriebegehäuse festgelegt ist bzw. gehalten wird. In einem derartigen Zustand dreht sich der Schaltbolzen 74 durch das gewählte Übersetzungsverhältnis mit derselben Rotationsgeschwindigkeit wie die Welle 72. Demnach führt der Schaltbolzen 74 keine Relativdrehung zu der Welle 72 aus. Durch die besondere Ausführung des Schaltbolzens 74 und der Schaltmittel wird so ein eingestellter Schaltzustand beibehalten.

Sofern das Hohlrad 90 rotiert wird, wird diese Drehung des Hohlrades als eine Drehung des Schaltbolzens 74 relativ zu der Welle 72 übertragen. Je nach Drehrichtung des Hohlrades 90 wird der Schaltbolzen 74 mit einer Rotationsgeschwindigkeit schneller oder langsamer als die Welle 72 rotiert. Sofern das Hohlrad 90 wieder relativ zu dem Getriebegehäuse festgelegt wird, dreht sich der Schaltbolzen 74 mit derselben Rotationsgeschwindigkeit wie die Welle 72. Dadurch kann eine Drehung des Hohlrades 90 um einen bestimmten Drehwinkel eine Drehung des Schaltbolzens 74 relativ zu der Welle 72 um einen bestimmten Drehwinkel bewirken.

Das Hohlrad 90 ist über die Hohlradwelle 93 mit der Zugscheibe 94 verbunden. Die Zugscheibe 94 ist vorzugsweise mit einem nicht dargestellten Bowdenzug verbunden und übersetzt eine Zugbewegung des Bowdenzuges in eine Rotationsbewegung der Hohlradwelle 93. Somit lässt sich durch Betätigen des Bowdenzuges der Schaltbolzen 74 relativ zu der Welle 72 rotieren, um eine bestimmte Rotationsposition des Schaltbolzens relativ zu der Welle 72 zu realisieren.

Die Übertragergetriebe 82, 98 können alternativ auch als Ketten, Riemen oder Zahnriemen ausgebildet sein.

Vorzugsweise ist die Zugscheibe 94 mit einer nicht dargestellten Feder bzw. einer Rückholfeder vorgespannt. Die Feder ist so ausgebildet, dass sie beim Schalten in Richtung niedriger Gänge gespannt wird. Beim Hochschalten wird das Hohlrad durch die Feder betätigt bzw. rotiert. Dadurch ist ein Hochschalten ohne Kraftaufwand möglich. Beim Herunterschalten wird die Feder durch die Kraft, die über den Baudenzug übertragen wird, gespannt.

Alternativ kann die Zugscheibe 94 auch ohne Feder ausgebildet sein. Die Schaltbetätigung erfolgt dann mittels zweier Bowdenzüge. Dabei rotiert ein erster der Bowdenzüge das Hohlrad in eine erste Richtung und ein zweiter der Bowdenzüge das Hohlrad in die zweite Richtung, um hoch- bzw. herunterzuschalten.

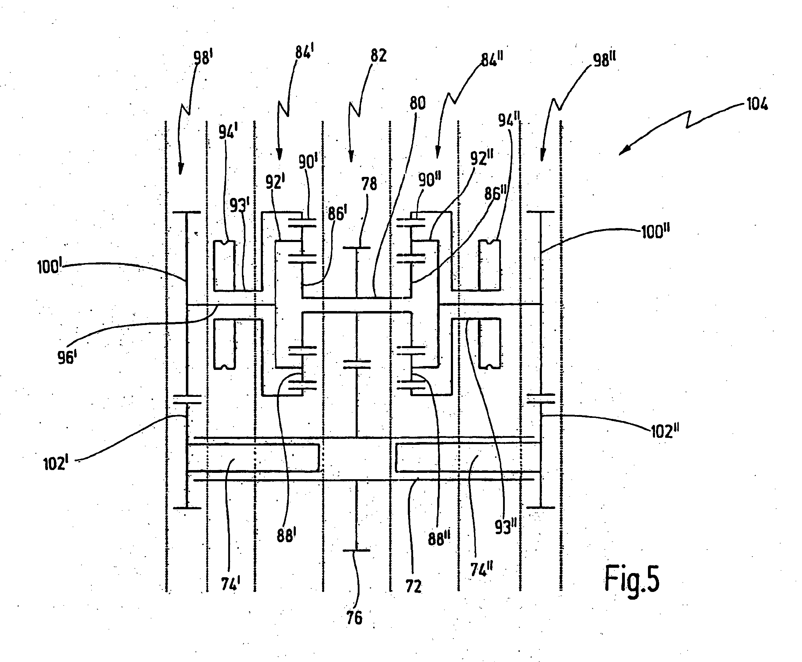

In Fig. 5 ist ein Schaltplan einer Schaltvorrichtung nach dem Prinzip der Schaltvorrichtung 70 aus Fig. 4 dargestellt. Die Schaltvorrichtung in Fig. 5 ist allgemein mit 104 bezeichnet. Gleiche Elemente sind mit gleichen Bezugsziffern bezeichnet, wobei hier lediglich die Unterschiede erläutert sind.

Prinzipiell ist die Schaltvorrichtung 104 identisch mit der Schaltvorrichtung 70 aus Fig. 4, wobei die Schaltvorrichtung 104 dazu ausgelegt ist, zwei drehbare Schaltbolzen in der Welle 72 unabhängig voneinander zu rotieren.

In der Welle 72 sind Schaltbolzen 74' und 74" angeordnet. Die Welle 72 ist über das erste Übertragergetriebe 82 mit einer Nebenwelle 80 verbunden. Die Nebenwelle 80 ist über ein Planetengetriebe 84 und ein zweites Übertragergetriebe 98' mit dem Schaltbolzen 74' verbunden, wobei das Funktionsprinzip identisch ist mit dem der Schaltvorrichtung 70 aus Fig. 4.

Anders als bei der Schaltvorrichtung 70 ist die Nebenwelle 80 zusätzlich mit einem Planetengetriebe 84" verbunden. Das Planetengetriebe 84" ist vorzugsweise identisch mit dem Planetengetriebe 84'. Das Planetengetriebe 84" ist über ein zweites Übertragergetriebe 98" mit dem Schaltbolzen 74" verbunden. Wie bei der Schaltvorrichtung 70 sind die Übersetzungsverhältnisse von der Welle 72 auf den Schaltbolzen 74' und den Schaltbolzen 74" gerade 1, sofern entsprechende Hohlräder 90' und 90" relativ zu dem Getriebegehäuse festgelegt sind.

Die Hohlräder 90', 90" sind jeweils mittels einer Zugscheibe 94', 94" über Hohlradwellen 93', 93" betätigbar. Mittels der Schaltvorrichtung 104 können die beiden drehbaren Schaltbolzen 74', 74" relativ zu der Welle 72 rotiert werden und somit unabhängig voneinander nicht dargestellte Schaltmittel betätigen.

Die Schaltvorrichtung 104 kann bspw. verwendet werden, um die Losräder der Teilgetriebe 42 und 44 in Fig. 3 unabhängig voneinander mit den entsprechenden Wellen drehfest zu verbinden, um zwei hintereinander geschaltete Teilgetriebe zu bilden.

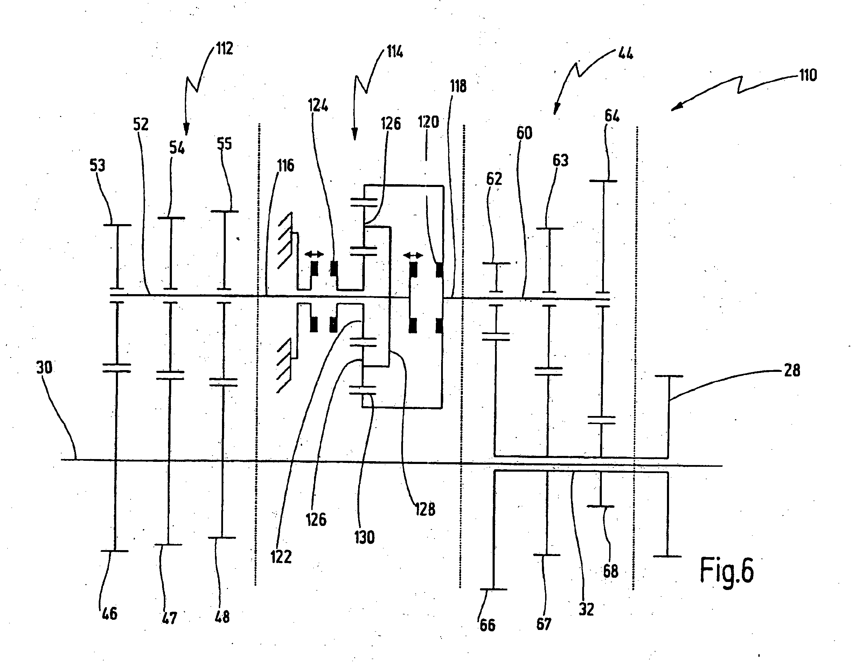

In Fig. 6 ist ein Schaltplan einer Getriebeeinheit mit drei hintereinander geschalteten Teilgetrieben dargestellt und generell mit 110 bezeichnet.

Die Getriebeeinheit 110 ist teilweise identisch mit der Getriebeeinheit 10 aus Fig. 3. Gleiche Elemente sind mit gleichen Bezugsziffern bezeichnet, wobei hier lediglich die Unterschiede erläutert sind.

Die Eingangswelle 30 bildet die Eingangswelle eines ersten Teilgetriebes 112. Das erste Teilgetriebe 112 ist im Wesentlichen identisch mit dem ersten Teilgetriebe 42 aus Fig. 3, wobei das erste Teilgetriebe 112 lediglich drei unterschiedliche Radsätze aufweist.

Die Vorgelegewelle 52 des ersten Teilgetriebes 112 ist verbunden mit einem Umlaufrädergetriebe bzw. einem Planetengetriebe 114. Die Vorgelegewelle 52 ist drehfest mit einer Eingangswelle 116 des Planetengetriebes 114 verbunden. Vorzugsweise ist die Vorgelegewelle 52 mit der Eingangswelle 116 einstückig ausgebildet. Eine Ausgangswelle 118 des Planetengetriebes 114 ist drehfest mit der Eingangswelle 60 des zweiten Teilgetriebes 44 verbunden. Vorzugsweise ist die Ausgangswelle 118 einstückig mit der Eingangswelle 60 ausgebildet. Das Planetengetriebe 114 weist eine erste Kupplung 120 auf, mittels der die Eingangswelle 116 drehfest mit der Ausgangswelle 118 verbindbar ist. Die Kupplung 120 ist vorzugsweise als Freilauf ausgebildet.

Das Planetengetriebe weist ein Sonnenrad 122 auf. Das Sonnenrad 122 ist mittels einer zweiten Kupplung 124 mit dem Getriebegehäuse 40 drehfest verbindbar. Das Planetengetriebe 114 weist ferner Planetenräder 126 auf, die mittels eines Planetenträgers 128 drehbar gelagert sind. Der Planetenträger 128 ist mit der Eingangswelle 116 drehfest verbindbar. Ferner weist das Planetengetriebe 114 ein Hohlrad 130 auf, das mit der Ausgangswelle 118 drehfest verbindbar ist.

Zwischen der Eingangswelle 116 und der Ausgangswelle 118 des Planetengetriebes 114 sind drei unterschiedliche Übersetzungsverhältnisse einstellbar und somit drei Gangstufen realisierbar. Die erste Gangstufe wird gebildet, indem die erste Kupplung 120 geschlossen wird und die zweite Kupplung 124 geöffnet wird. Dadurch ist die Eingangswelle 116 drehfest mit der Ausgangswelle 118 verbunden. Das erste Übersetzungsverhältnis ist folglich gleich 1.

Die zweite Gangstufe wird gebildet, indem die erste Kupplung 120 geöffnet wird und die zweite Kupplung 124 geschlossen wird. Dadurch wird das Sonnenrad 122 festgehalten und der rotierende Planetenträger 128 treibt das Hohlrad 130 an, das mit der Ausgangswelle 118 verbunden ist. Die zweite Übersetzung ist folglich eine Übersetzung ins Schnelle.

Die dritte Gangstufe wird gebildet, indem die zweite Kupplung 124 geschlossen wird und somit das Sonnenrad festgehalten wird. Ferner wird mittels einer weiteren Kupplung die Eingangswelle 116 mit dem Hohlrad 130 verbunden. Ferner wird der Planetenträger 128 mit der Ausgangswelle 118 verbunden, so dass der Planetenträger 128 den Abtrieb des Planetengetriebes 114 bildet.

Somit sind durch die Teilgetriebe 112 und 44 und durch das Planetengetriebe 114 jeweils drei schaltbare Gangstufen gebildet und dadurch, dass die drei Teilgetriebe 112, 114, 44 in Reihe geschaltet sind, können durch die Getriebeeinheit 110 achtzehn Gangstufen realisiert werden.

Die Teilgetriebe 112, 44 werden vorzugsweise mittels der Schaltvorrichtung 104 aus Fig. 5 geschaltet, wobei wenigstens einer der Schaltbolzen 74', 74" Schaltmittel aufweist, die wenigstens eine der Kupplungen 120, 124 betätigt.

Es versteht sich, dass bei der Getriebeeinheit 110 in Fig. 6 auch durch eine Kupplung die Eingangswelle 30 mit der Ausgangswelle 32 verbindbar ist, um einen, in diesem Fall neunzehnten Gang zu bilden.

Zur Erhöhung der Ganganzahl ist es auch denkbar, das Planetengetriebe 114 als mehrstufiges Planetengetriebe auszuführen.

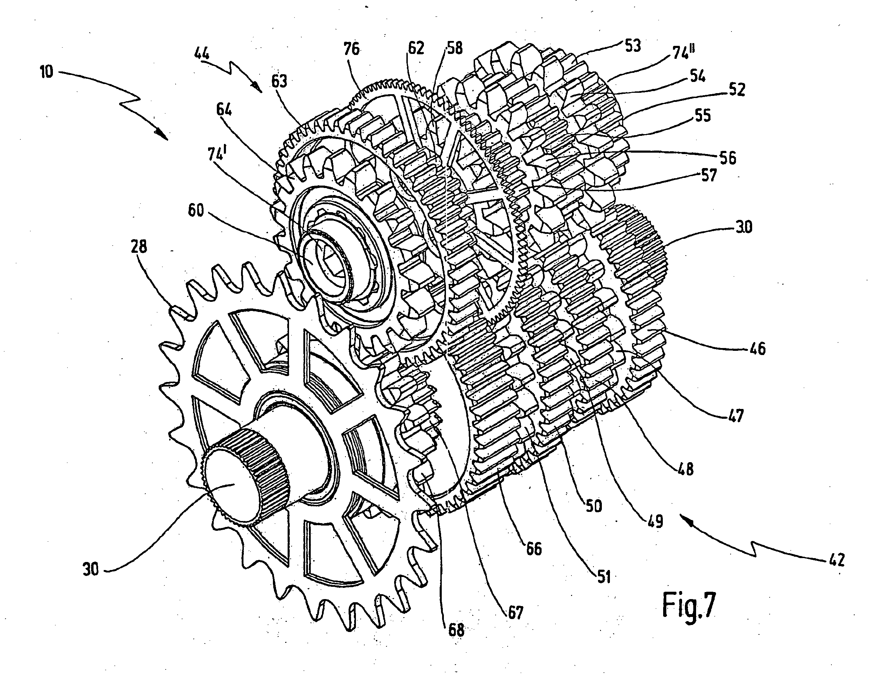

In Fig. 7 ist eine perspektivische Darstellung der Getriebeeinheit 10 gezeigt. Die Getriebeeinheit entspricht dem Schaltplan gemäß Fig. 3, wobei gleiche Elemente mit gleichen Bezugsziffern bezeichnet sind und hier lediglich die Unterschiede erläutert sind.

Die Vorgelegewelle 52 des ersten Teilgetriebes 42 ist einstückig ausgebildet mit der Eingangswelle 60 des zweiten Teilgetriebes 44. Die angetriebenen Räder 53 bis 58 und die Antriebsräder 62 bis 64 sind als Losräder ausgebildet und mittels der Schaltbolzen 74' und 74" schaltbar. Ferner ist das Antriebsrad 76 an der Welle 52 bzw. 60 gelagert, um über die nicht dargestellte Schaltvorrichtung 104 die Schaltbolzen 74' und 74" anzutreiben.

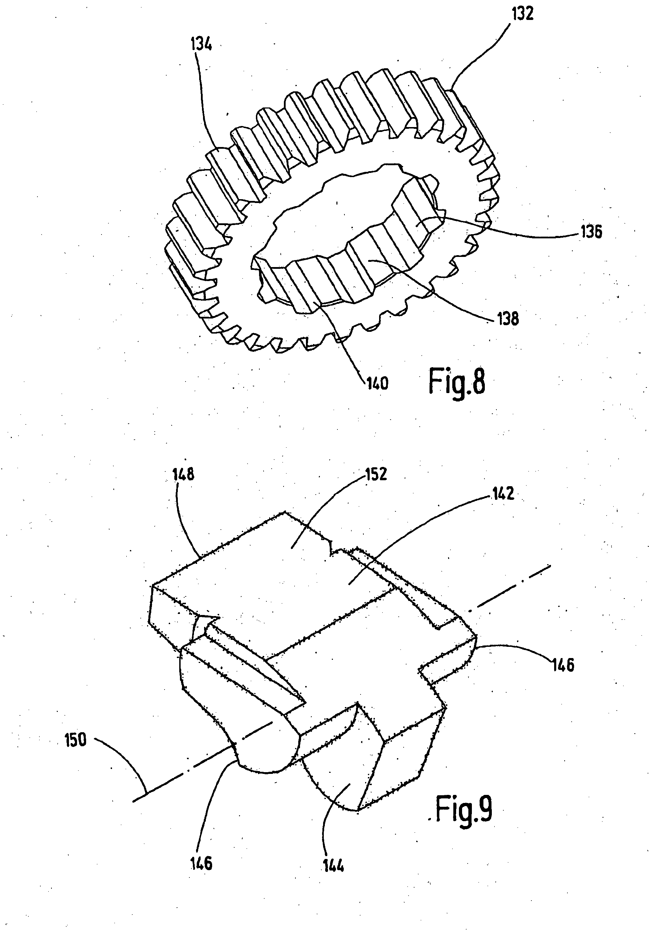

In Fig. 8 ist ein schaltbares Losrad mit Innenverzahnung dargestellt und allgemein mit 132 bezeichnet.

Das Losrad 132 weist eine Außenverzahnung 134 und eine Innenverzahnung 136 auf. Die Außenverzahnung 134 ist an der äußeren Umfangsfläche gebildet. Die Innenverzahnung ist an einer inneren Umfangsfläche des Losrades 132 gebildet. Die Innenverzahnung 136 weist Gleitabschnitte 138 und Eingriffsabschnitte 140 auf. Die Gleitabschnitte 138 sind in Umfangsrichtung des Losrades 132 angeordnete Flächen. Zwischen den Gleitabschnitten 138 sind in einem Winkel zu den Gleitabschnitten 138 die Eingriffsabschnitte 140 gebildet.

Die Außenverzahnung 134 dient dazu mit anderen Zahnrädern zu kämmen. Die Innenverzahnung 136 dient dazu, das Losrad 132 an einer Welle zu lagern und mittels Schaltmitteln mit der Welle drehfest zu verbinden. Dabei dienen die Gleitabschnitte 138 dazu, das Losrad 132 an der Welle zu lagern und auf der Welle zu gleiten. Die Eingriffsabschnitte 140 dienen dazu, dass nicht dargestellte Schaltmittel, die im Weiteren näher erläutert werden, mit dem Losrad 132 in Eingriff gebracht werden können und das Losrad 132 drehfest mit der Welle zu verbinden.

In Fig. 9 ist ein Freilaufkörper zum drehfesten Verbinden des Losrades 132 mit einer entsprechenden Welle dargestellt und allgemein mit 142 bezeichnet. Der Freilaufkörper 142 weist einen Betätigungsabschnitt 144 auf, der an einer Unterseite des Freilaufkörpers 142 gebildet ist. Der Freilaufkörper 142 weist an zwei seitlichen Abschnitten jeweils einen Lagerungsabschnitt 146 auf. Der Freilaufkörper 142 weist einen Eingriffsabschnitt 148 auf. Der Eingriffsabschnitt 148 ist an einem dem Betätigungsabschnitt 144 gegenüberliegenden Ende des Freilaufkörpers 142 gebildet. Die Lagerungsabschnitte 146 sind an gegenüberliegenden Seiten des Freilaufkörpers 142 gebildet, und zwar zwischen dem Betätigungsabschnitt 144 und dem Eingriffsabschnitt 148.

Die Lagerungsabschnitte 146 dienen dazu, den Freilaufkörper 142 an einer Welle um eine Drehachse 150 drehbar bzw. schwenkbar zu lagern. Dabei wird der Freilaufkörper 142 an der Welle derart befestigt bzw. gelagert, dass der Betätigungsabschnitt 144 zum Inneren der Welle weist. Ferner ist der Freilaufkörper 142 mittels eines Federelementes derart vorgespannt, dass der Betätigungsabschnitt 144 im unbelasteten Zustand nach radial innen geschwenkt wird und der Eingriffsabschnitt 148 nach radial außen geschwenkt wird. Der Betätigungsabschnitt 144 dient dazu, mittels des Schaltbolzens 74 nach radial außen gedrückt zu werden, um den Eingriffsabschnitt 148 um die Drehachse 150 nach radial innen zu schwenken.

Sofern der Eingriffsabschnitt 148 nach radial außen geschwenkt ist und gegenüber der Welle hervorsteht, kann er mit dem Eingriffsabschnitt 140 der Innenverzahnung 136 des Losrades 132 in einer Drehrichtung des Losrades 132 in Eingriff gebracht werden und so das Losrad mit der Welle in der Drehrichtung drehfest verbinden.

Der Freilaufkörper 142 weist ferner einen Gleitabschnitt 152 auf. Der Gleitabschnitt 152 dient dazu, den Freilaufkörper 142 nach radial innen zu schwenken, sofern das Losrad relativ zu der Welle in einer der Drehrichtung entgegengesetzten Richtung gedreht wird und so als Freilauf dient.

Der Betätigungsabschnitt 144 kann eine oder mehrere senkrecht zu der Drehachse 150 bzw. in Drehrichtung der Welle verlaufende Nut bzw. Nuten aufweisen, um ein selektives Betätigen zu ermöglichen. Dies wird im weiteren näher erläutert.

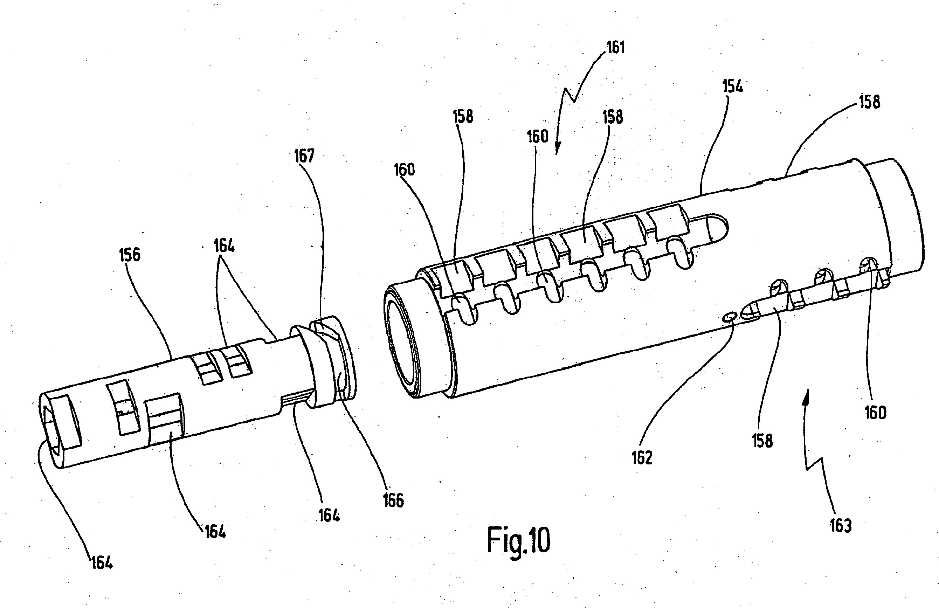

In Fig. 10 sind eine Welle zur Lagerung von schaltbaren Losrädem 132 und ein Schaltbolzen zum Schalten der Freilaufkörper 142 in Explosionsdarstellung gezeigt. Die Welle ist allgemein mit 154 und der Schaltbolzen mit 156 bezeichnet. Die Welle 154 ist zur Aufnahme des Schaltbolzens 156 als Hohlwelle ausgebildet. Die Welle 154 weist Lagerabschnitte 158 auf. Im Bereich der Lagerabschnitte 158 sind Durchgangslöcher 160 ausgebildet. Die Welle 154 weist eine erste Gruppe 161 der Lagerabschnitte 158 auf, die axial nebeneinander ausgebildet sind. Ferner weist die Welle 154 eine zweite Gruppe 163 der Lagerabschnitte 158 auf, die axial nebeneinander ausgebildet sind. Die erste Gruppe 161 der Lagerabschnitte 158 ist gegenüber der zweiten Gruppe 163 der Lagerabschnitte 158 in Umfangsrichtung versetzt angeordnet. Es sind jeweils zwei der Lagerabschnitte 158 an gegenüberliegenden Seiten der Welle 154 angeordnet.

Die Lagerabschnitte 158 sind so ausgebildet, dass sie jeweils einen der Freilaufkörper 142 aufnehmen können. Die Durchgangslöcher 160 dienen dazu, dass der Betätigungsabschnitt 144 durch die Durchgangslöcher 160 hindurchschwenken kann und von dem Schaltbolzen 156 betätigt werden kann. Die Lagerabschnitte 158 sind in der Welle 154 so ausgebildet, dass die Freilaufkörper 142 in einem eingeschwenkten Zustand gegenüber der Umfangsfläche der Welle 154 nicht hervorstehen. In diesem eingeschwenkten Zustand bildet die Umfangsfläche der Welle 154 und der Gleitabschnitt 152 der Freilaufkörper 142 im Wesentlichen eine Fläche.

In der Welle 154 ist weiterhin ein Stiftloch 162 ausgebildet, durch das ein Führungsstift hindurchgeführt werden kann.

Der Schaltbolzen 156 weist Betätigungsabschnitte 164 auf, die über den Umfang des Schaltbolzens 156 ausgebildet sind. Die Betätigungsabschnitte 164 sind als Ausnehmungen ausgebildet. Der Schaltbolzen 156 weist ferner eine umfängliche Nut 166 auf. Die Nut 166 weist zwei umfängliche Abschnitte auf, die axial versetzt sind und durch einen Schrägabschnitt 167 miteinander verbunden sind. Die Betätigungsabschnitte 164 sind axial versetzt und umfänglich verteilt angeordnet. Die Betätigungsabschnitte 164 sind teilweise in axialer Richtung nebeneinander angeordnet. Die Betätigungsabschnitte 164 sind an gegenüberliegenden Seiten des Schaltbolzens 156 angeordnet, und zwar entsprechend den Lagerabschnitten 158 in der Welle 154.

Der Schaltbolzen 156 ist so ausgebildet, dass die Betätigungsabschnitte 164 je nach Drehposition des Schaltbolzens in der Welle 154 an einem der Durchgangslöcher 160 positioniert sind. Dadurch kann der Betätigungsabschnitt 144 der Freilaufkörper 142 in den Betätigungsabschnitt 164 einschwenken und somit den Eingriffsabschnitt 148 mit der Innenverzahnung 136 in Eingriff bringen. Der Schaltbolzen 156 dient dazu, die Freilaufkörper 142 der ersten Gruppe 161 von Lagerabschnitten 158 zu betätigen. Die Nut 166 ist in dem eingesetzten Zustand des Schaltbolzens 156 im Bereich des Stiftlochs 162 angeordnet, so dass die Nut 166 einen nicht dargestellten Stift, der durch das Stiftloch 162 hindurchgeführt ist, aufnehmen kann. Dadurch wird der Schaltbolzen 156 je nach Rotationsposition in der Welle 154 in unterschiedliche Axialpositionen bewegt.

Diese axiale Verschiebung des Schaltbolzens 156 dient dazu, den nutzbaren Drehbereich des Schaltbolzens zu vergrößern. Die axiale Verschiebung bewirkt, dass einige der Betätigungsabschnitte 164 durch ihre Axialposition relativ zu den Betätigungsabschnitten 144 die Freilaufkörper 142 nicht betätigen können. Umgekehrt bedeutet das, dass bestimmte Betätigungsabschnitte 144 von bestimmten Freilaufkörpern 142 in der zweiten Axialposition betätigbar sind. Durch die Axialverschiebung des Schaltbolzens 156 sind folglich einige der Betätigungsabschnitte 164 nicht unterhalb der Betätigungsabschnitte 144 angeordnet und können folglich die Freilaufkörper 142 nicht betätigen. Dadurch entsteht bei gegenüberliegenden Schaltklinken ein zusätzlicher nutzbarer Drehbereich von 180° für weitere schaltbare Zahnräder. Es ist auch denkbar, den nutzbaren Drehbereich des Schaltbolzens 156 durch eine weitere Axialverschiebung noch weiter zu vergrößern.

Eine weitere Möglichkeit zur Erweiterung des nutzbaren Drehbereichs des Schaltbolzens ist eine unterschiedliche Ausgestaltung der Betätigungsabschnitte 144. Durch eine asymmetrische Ausgestaltung der Betätigungsabschnitte 144 und entsprechender Betätigungsabschnitte 164 können nur bestimmte Freilaufkörper 142 betätigt werden bzw. nur bestimmte Betätigungsabschnitte 144 in bestimmte Betätigungsabschnitte 164 des Schaltbolzens 156 einschwenken. Dadurch kann der nutzbare Drehbereich des Schaltbolzens 156 auch bei gegenüberliegenden Freilaufkörpern von 180° auf 360° erweitert werden.

Beispielsweise können die Betätigungsabschnitte 144 der Freilaufklinken 142 eine oder mehrere in Drehrichtung der Welle 154 verlaufende Nuten aufweisen, so dass derartig ausgestaltete Betätigungsabschnitte 144 nur in entsprechend ausgestaltete Betätigungsabschnitte 164 einschwenken können. Dabei kann die Anzahl und die Position derartiger Nuten ein selektives Betätigen ermöglichen.

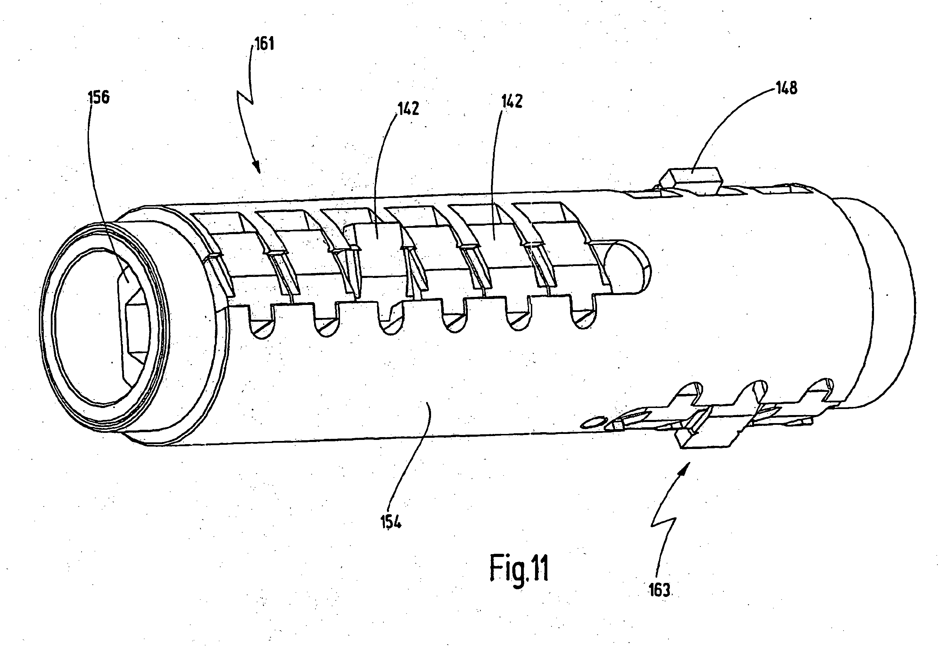

In Fig. 11 ist die Welle 154 mit dem eingesetzten Schaltbolzen 156 und den Freilaufkörpern 142 dargestellt. Gleiche Elemente sind mit gleichen Bezugsziffern versehen, wobei hier lediglich die Unterschiede dargestellt sind.

Der Schaltbolzen 156 ist derart in der Welle 154 positioniert, dass zwei der Freilaufkörper 142 ausgeschwenkt ist, wobei nur einer sichtbar ist.

In der Welle 154 ist ferner ein zweiter, nicht dargestellter bzw. nicht sichtbarer Schaltbolzen eingesetzt, der die zweite Gruppe 163 von Freilaufkörpern betätigt. Dieser Schaltbolzen ist derart in der Welle 154 angeordnet, dass zwei Freilaufkörper 142 der zweiten Gruppe 163 ausgeschwenkt sind, so dass der Eingriffsabschnitt 148 mit dem Eingriffsabschnitt 140 der Innenverzahnung 136 des Losrades 132 in Eingriff bringbar ist.

Durch ausgewählte Rotationspositionen der beiden Schaltbolzen 156 können zwei Losräder 132 mit der Welle 154 drehfest verbunden werden, so dass eine der achtzehn möglichen Gangstufen geschaltet ist.

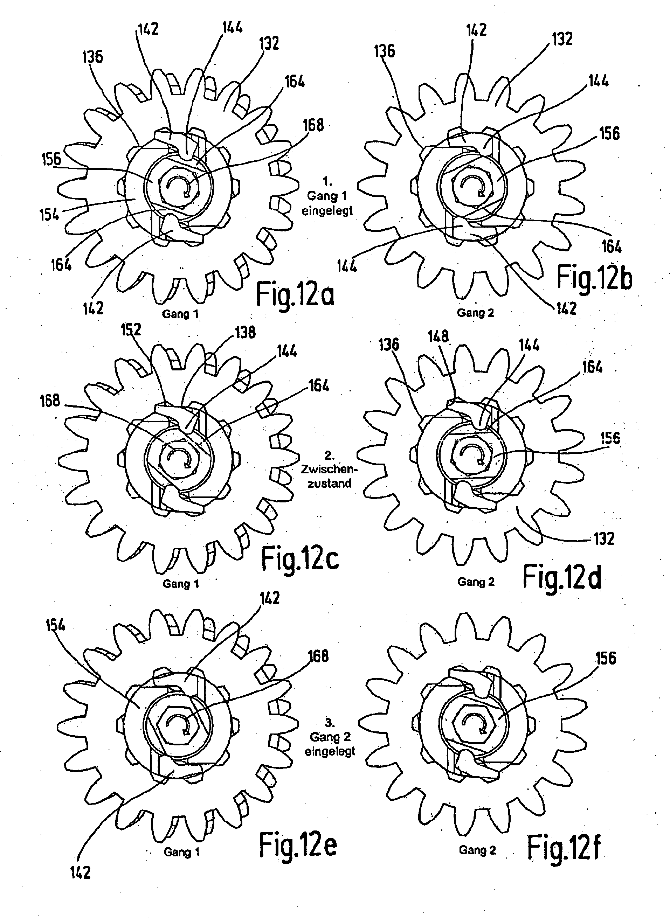

In den Figuren 12A bis 12F sind radiale Schnittansichten durch benachbarte Losräder 132 gezeigt, während dreier Phasen eines Gangwechsels.

Fig. 12A zeigt ein erstes der Losräder 132, dessen Innenverzahnung 136 mit den zwei zugeordneten Freilaufkörpern 142 in Eingriff steht. Der Schaltbolzen 156 ist relativ zu der Welle 154 in einer Rotationsposition, so dass die Betätigungsabschnitte 164 des Schaltbolzens 156 im Bereich der Betätigungsabschnitte 144 der Freilaufkörper 142 angeordnet ist und so der Freilaufkörper 142 nach außen schwenken kann.

Das zweite der Losräder 132, das einer nächst höheren Gangstufe, und zwar dem zweiten Gang, zugeordnet ist, ist in Fig. 12B gezeigt. Die Freilaufkörper 142 sind radial nach innen eingeschwenkt und stehen folglich nicht mit der Innenverzahnung 136 des Losrades 132 in Eingriff. In der Rotationsposition des Schaltbolzens 156 sind die Betätigungsabschnitte 164, die dem zweiten Gang zugeordnet sind, nicht unter den Betätigungsabschnitten 144 der Freilaufkörper 142 angeordnet, so dass die Betätigungsabschnitte 144 nach außen gedrückt werden.

Wird der Schaltbolzen 156 gedreht, wie es durch einen Pfeil 168 angedeutet ist, so bleibt der Betätigungsabschnitt 164 unterhalb des Freilaufkörpers 142, der dem ersten der Losräder 132 und somit dem ersten Gang zugeordnet ist, wie es in Fig. 12C dargestellt ist, so dass die Freilaufkörper 142 des ersten Gangs nach außen ausgeschwenkt bleiben.

In Fig. 12D ist das zweite der Losräder 132 in dieser Rotationsposition des Schaltbolzens 156 dargestellt, das dem zweiten Gang zugeordnet ist. In dieser Rotationsposition des Schaltbolzens 156 ist der Betätigungsabschnitt 164, der dem zweiten Gang zugeordnet ist, radial unterhalb des Betätigungsabschnitts 144 des zweiten Gangs angeordnet, so dass der Betätigungsabschnitt 144 radial nach innen einschwenken und somit der Eingriffsabschnitt 148 radial nach außen ausschwenken kann. Dadurch kann der Eingriffsabschnitt 148 mit der Innenverzahnung 136 des Losrades 132 in Eingriff gebracht werden. Den Freilaufkörpern 142 ist jeweils eine Feder zugeordnet, die den entsprechenden Freilaufkörper 142 so vorspannt, dass der Betätigungsabschnitt 144 gegen den Schaltbolzen 156 gedrückt wird. Dadurch schwenkt der Eingriffsabschnitt 148 aus, sofern einer der Betätigungsabschnitte 164 unter die Schaltklinke 142 gedreht wird.

Da die höhere Gangstufe ein kleineres Übersetzungsverhältnis aufweist, greifen die Freilaufklinken 142 des höheren Ganges in die Innenverzahnung 136 ein und treiben die Welle 154 mit einer Rotationsgeschwindigkeit an, die größer ist als die Rotationsgeschwindigkeit des Losrades 132 des niedrigeren Ganges. Daher wird das Losrad 132 des niedrigeren Ganges in diesem sogenannten Zwischenzustand relativ zu der Welle 154 in entgegengesetzter Richtung rotiert. Dadurch drückt der Gleitabschnitt 138 des Losrades 132 gegen den Gleitabschnitt 152 des Freilaufkörpers 142, so dass der Freilaufkörper 142 nach innen ausgelenkt wird und das erste der Losräder 132 auf der Welle 154 gleitet. Das Losrad 132 des niedrigeren Ganges, also des ersten Ganges, befindet sich in dem Zwischenzustand im Freilauf.

In den Figuren 12E und 12F ist der Zustand dargestellt, in dem der zweite Gang vollständig eingelegt ist. Dazu ist der Schaltbolzen 156 in Richtung des Pfeils 168 weitergedreht worden, so dass die Freilaufkörper 142 des ersten Gangs durch den Schaltbolzen 156 eingeschwenkt sind, wie es in Fig. 12E gezeigt ist. In Fig. 12F ist gezeigt, dass die Freilaufkörper 142 des zweiten Gangs weiterhin mit der Innenverzahnung 136 in Eingriff stehen, weil die Betätigungsabschnitte 164 des zweiten Gangs radial unterhalb der Betätigungsabschnitte 144 der Freilaufkörper 142 angeordnet sind.

Durch den Zwischenzustand, in dem die Freilaufkörper 142 von zwei aufeinander folgenden Gängen radial ausgeschwenkt sind, ist ein Schalten unter Last möglich. Ferner wird ein Leerlaufzustand vermieden.

Beim Schalten in einen niedrigen Gang gleitet zunächst in dem Zwischenzustand der Gleitabschnitt 138 der Innenverzahnung 136 des niedrigeren Ganges über die Freilaufkörper 142 hinweg. Der höhere Gang bleibt zunächst eingeschaltet. Die Freilaufkörper 142 werden erst dann eingeschwenkt bzw. ausgeschaltet, wenn die Last, die über das Losrad 132 auf die Welle 154 übertragen wird, zurückgenommen wird. Zusätzlich muss dann der Schaltbolzen 156 weitergedreht werden, so dass der Betätigungsabschnitt 144 nach außen gedrückt wird. Der niedrigere Gang ist dann sofort eingelegt, weil sich dieser Gang bereits im Zwischenzustand bzw. im Freilaufzustand befand. Dadurch wird ein Leerlaufzustand vermieden.

In Fig. 12 ist ein Schaltbolzen 156 mit genau gegenüberliegenden Betätigungsabschnitten 164 dargestellt. Alternativ ist es auch denkbar, dass die Betätigungsabschnitte 164 so relativ zueinander angeordnet sind, dass lediglich eine der Schaltklinken in Eingriff mit der Innenverzahnung 136 gebracht wird. Dies wird realisiert, indem die Schaltklinken 142 an der Welle 154 nicht genau gegenüberliegend angeordnet sind. Dadurch kann der Drehwinkel des Losrades 132 bis zum Einrasten des Betätigungsabschnittes 148 in die Innenverzahnung 136 verkleinert werden.

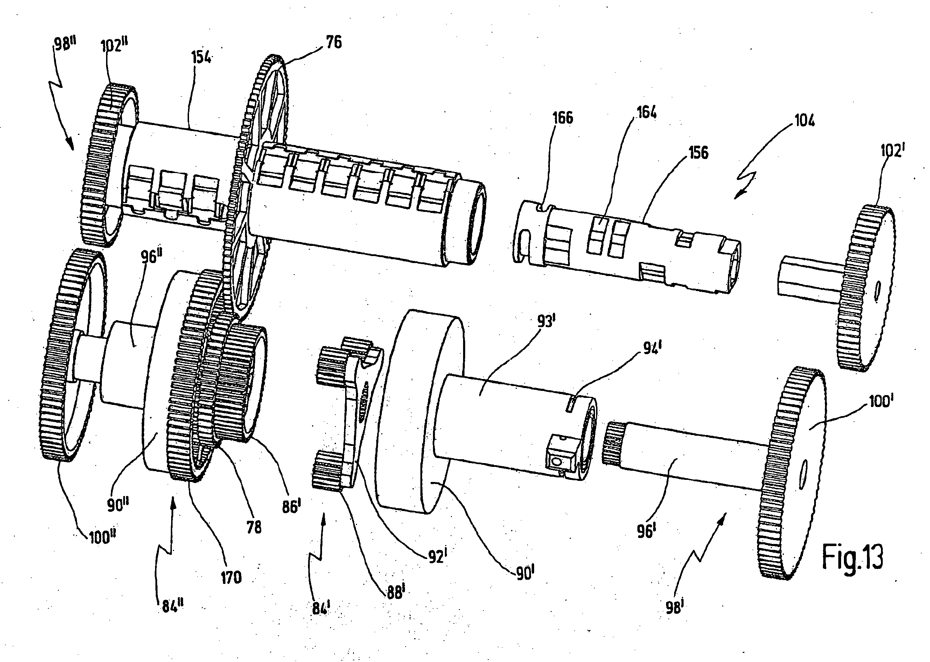

In Fig. 13 ist die Welle 154 und die Schaltvorrichtung 104 in einer perspektivischen Explosionsdarstellung gezeigt. Die Darstellung in Fig. 13 entspricht dem Schaltplan aus Fig. 5. Gleiche Elemente sind mit gleichen Bezugsziffern bezeichnet, wobei hier lediglich der Unterschied erläutert ist.

Die Zugscheibe 94' ist über die Hohlradwelle 93' mit dem Hohlrad 90' verbunden. Die Hohlradwelle 93' ist als Hohlwelle ausgebildet, um die Abtriebswelle 96' aufzunehmen. Durch die Zugscheibe 94' wird das Hohlrad 90' rotiert, um den Schaltbolzen 156 relativ zu der Welle 154 zu rotieren.

Das Hohlrad 90" weist zusätzlich zu der Innenverzahnung 136 eine Außenverzahnung 170 auf. Die Außenverzahnung 170 dient dazu, das Hohlrad 90" über die nicht dargestellte Hohlradwelle 93" mit der nicht dargestellten Zugscheibe 94" zu verbinden.

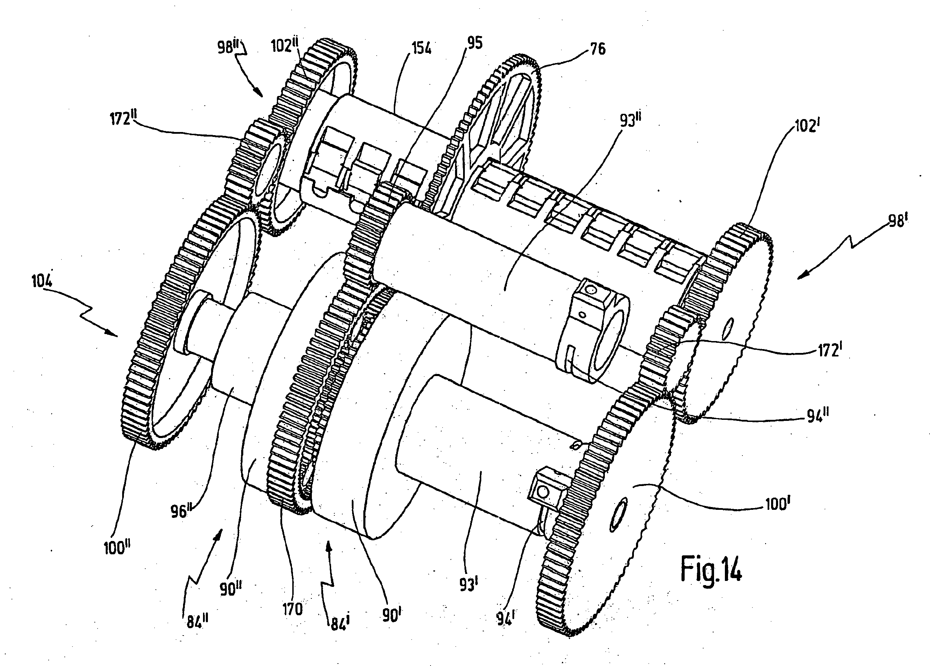

Fig. 14 zeigt eine perspektivische Darstellung der Welle 154 und der Schaltvorrichtung 104 aus Fig. 13 in zusammengebautem Zustand. Gleiche Elemente sind mit gleichen Bezugsziffern versehen, wobei hier lediglich die Unterschiede dargestellt sind.

Die Außenverzahnung 170 des Hohlrades 90" ist drehfest verbunden mit der Hohlradwelle 93", die verbunden ist mit der Zugscheibe 94". Die Hohlradwelle 93" ist parallel versetzt zu der Hohlradwelle 93' angeordnet. Die Hohlradwelle 93" ist drehfest verbunden mit einem Zahnrad 95, das mit der Außenverzahnung 170 kämmt. Die angetriebenen Räder 102', 102" sind jeweils über ein Umlenkzahnrad 172', 172" mit den angetriebenen Rädern 102', 102" verbunden. Die Umlenkzahnräder 172', 172" dienen dazu, die Rotationsrichtung des Schaltbolzens 157 umzukehren.

Um die Steuerung mehrerer schaltbarer Teilgetriebe, z.B. Teilgetriebe 42 und 44, mit nur einem Schaltzug oder dergleichen zu ermöglichen, lässt sich die Steuerung mehrerer Teilgetriebe kombinieren. Dazu kann z.B. der Schaltbolzen 74' so ausgeführt sein, dass nach Weiterdrehen des Schaltbolzens 74' über den letzten bzw. höchsten Gang dieses Teilgetriebes hinaus wieder der erste Gang folgt. Ferner wäre es zur Lösung dieser Aufgabe nötig, einen Mechanismus bereitzustellen, der bei dem Weiterdrehen des Schaltbolzens 74' über den höchsten Gang hinaus den Schaltbolzen 74" um eine Schaltposition in den nächst höheren Gang dreht. Dies kann realisiert werden, indem die Hohlradwellen 93', 93" der Planetengetriebe 84', 84" zusammengeschaltet werden. So können z.B. beide Hohlräder 90', 90" zusammengeschaltet werden. Bspw. kann die Getriebeeinheit 10 vom sechsten in den siebten Gang geschaltet werden, indem der Schaltbolzen 74', der dem Teilgetriebe 42 zugeordnet ist, nach einer Drehung um 360° weitergedreht wird, um das Teilgetriebe 44 vom sechsten Gang wieder in den ersten Gang zu schalten. Das Planetengetriebe 84", das dem Teilgetriebe 44 zugeordnet ist, ist so ausgelegt, dass beim Weiterdrehen nach dem sechsten Gang in Teilgetriebe 42 in Teilgetriebe 44 nach dem ersten Gang der zweite Gang eingelegt wird. Dadurch, dass im Teilgetriebe 42 auf den sechsten Gang der erste Gang folgt und gleichzeitig im Teilgetriebe 44 auf den ersten Gang der zweite Gang folgt, kann somit die Getriebeeinheit vom sechsten in den siebten Gang geschaltet werden.

Die Zugscheibe 94 ist vorzugsweise über einen Seilzug mit einem Schalthebel verbunden. Vorzugsweise ist die Zugscheibe mit einer Feder gegenüber dem Hohlrad 90 vorgespannt. Die Zugscheibe 94 und das Hohlrad 90 weisen vorzugsweise Anschläge auf, um die Zugscheibe 94 und das Hohlrad 90 mit einer definierten Federkraft gegeneinander vorzuspannen. Ein Entspannen der Feder erfolgt durch die Rotation des Hohlrades 90, wodurch der Schaltbolzen 74 rotiert und ein Gangwechsel durchgeführt wird. Sofern ein Gangwechsel in einen niedrigen Gang durchgeführt wird, wird zunächst der Schalthebel betätigt, wodurch die Zugscheibe 94 gegenüber dem Hohlrad 90 vorgespannt wird, ohne dass die Last des Getriebes reduziert wird. Da unter Last die Eingriffsabschnitt 148 in die Innenverzahnung 136 greifen und durch das übertragende Drehmoment in dieser Position rasten, kann der Schaltbolzen 156 nicht gedreht werden. Sobald die Last des Getriebes abfällt, also die Drehkraft reduziert wird, kann der Schaltbolzen 74 die Schaltklinke 142 und die Innenverzahnung 136 aufgrund der Federvorspannung des Hohlrades 90 außer Eingriff bringen. Dabei kann der beim Fahrradfahren typische oszillierende Tretkraftverlauf genutzt werden, da die auf die Tretkurbeln 16, 16' aufgebrachte Tretkraft bei vertikaler Stellung der Tretkurbeln 16, 16' stark reduziert ist.

In einer derartigen Stellung der Tretkurbel 16, 16' kann ein vorgespannter bzw. vorgewählter niedriger Gang vollständig eingelegt werden.

Im Allgemeinen ist es vorteilhaft, die verwendeten Zahnräder entsprechend des zu übertragenden Drehmoments bzw. entsprechend ihrer Übersetzung auszulegen. Dabei sollten Zahnräder, die große Tangentialkräfte bzw. große Drehmomente übertragen müssen, entsprechend breiter, also in axialer Richtung stärker ausgebildet sein. Demgegenüber ist es sinnvoll, Zahnräder mit kleinem Übersetzungsverhältnis mit geringerer Breite auszubilden, da diese geringere Tangentialkräfte bzw. geringere Drehmomente übertragen müssen. Dadurch kann der Bauraum in dem Getriebegehäuse optimiert werden, Ferner ist es bevorzugt, die Schaltmittel, die durch die Freilaufklinken und den Schaltbolzen gebildet sind, entsprechend den Tangentialkräften und den zu erwartenden Drehmomenten auszulegen. Dabei ist es auch denkbar, die Anzahl der Freilaufklinken 142 an die zu übertragenden Drehmomente anzupassen.

Sofern die Getriebeeinheit 10 zusätzlich mit dem Planetengetriebe 114 ausgeführt ist, wie es in Fig. 6 dargestellt ist, so muss die Ansteuerung des Teilgetriebes 112 mit der Ansteuerung des Planetengetriebes 114 kombiniert werden. Der Schaltbolzen 74 steuert dann die Kupplung 120 des Planetengetriebes 114. Das Hohlrad 90 des Planetengetriebes 84 aus Fig. 4 oder Fig. 5, steuert dann zusätzlich eine Schaltgabel, welche die Kupplung 124 des Planetengetriebes 114 betätigt. Die Funktionsweise dieser Schaltungssteuerung ist im Folgenden näher erläutert.

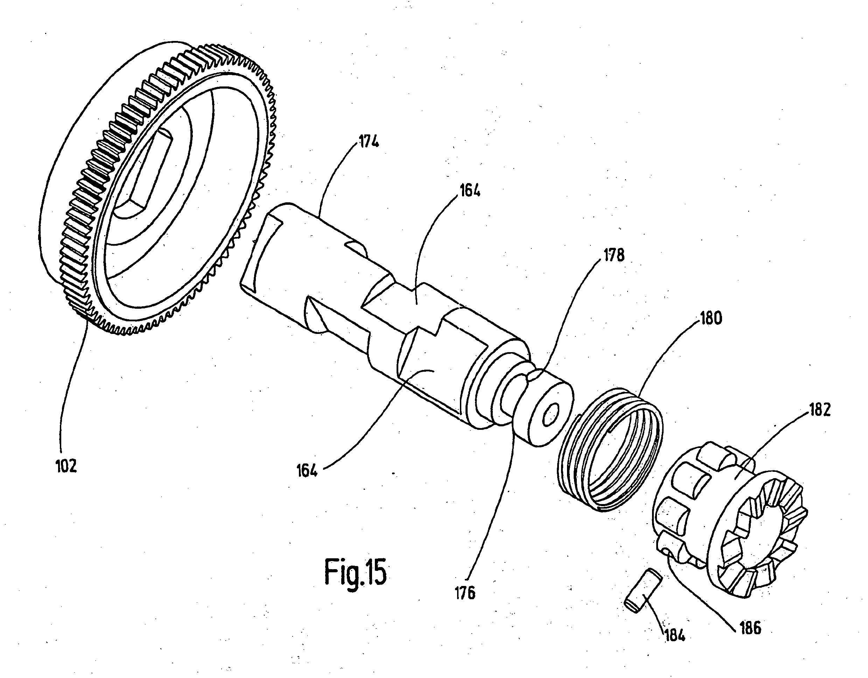

Fig. 15 zeigt eine Explosionsdarstellung eines Schaltbolzens zum Betätigen einer Kupplung des Planetengetriebes 114. Diese Ausführungsform des Schaltbolzens ist allgemein mit 174 bezeichnet. Der Schaltbolzen 174 weist die Betätigungsabschnitte 164 auf. Der Schaltbolzen 174 ist an einem axialen Ende mit dem angetriebenen Rad 102 drehfest verbindbar. An einem gegenüberliegenden axialen Ende des Schaltbolzens ist in dem Schaltbolzen 174 eine Nut 176 ausgebildet. Die Nut 176 weist zwei in Umfangsrichtung verlaufende Abschnitte auf, die gegeneinander axial versetzt sind. Die beiden umfänglich verlaufenden Abschnitte sind verbunden durch einen Schrägabschnitt 178.

In Fig. 15 ist eine Feder 180 und ein Eingangsglied 182 der Kupplung 120 darstellt. Dem Eingangsglied 182 ist ein Stift 184 zugeordnet, der in eine Bohrung 186 des Eingangsgliedes 182 einführbar ist.

Im eingesetzten Zustand ist die Feder 180 auf den Schaltbolzen 174 aufgesteckt und der Stift 184 in die Bohrung 186 eingeführt, so dass der Stift 184 in die Nut 176 greift. Durch die Feder 180 ist das Eingangsglied 182 gegenüber dem Schaltbolzen 174 axial vorgespannt. Sofern der Schaltbolzen 174 relativ zu dem Eingangsglied 182 rotiert wird, so dass der Stift 184 entlang des Schrägabschnitts 178 der Nut 176 gleitet, wird das Eingangsglied 182 durch eine Federkraft der Feder 180 in axialer Richtung bewegt und mit einem nicht dargestellten Ausgangsglied der Kupplung 120 in Eingriff gebracht. So kann durch Rotation des Schaltbolzens 174 die Kupplung 120 des Planetengetriebes 114 betätigt werden.

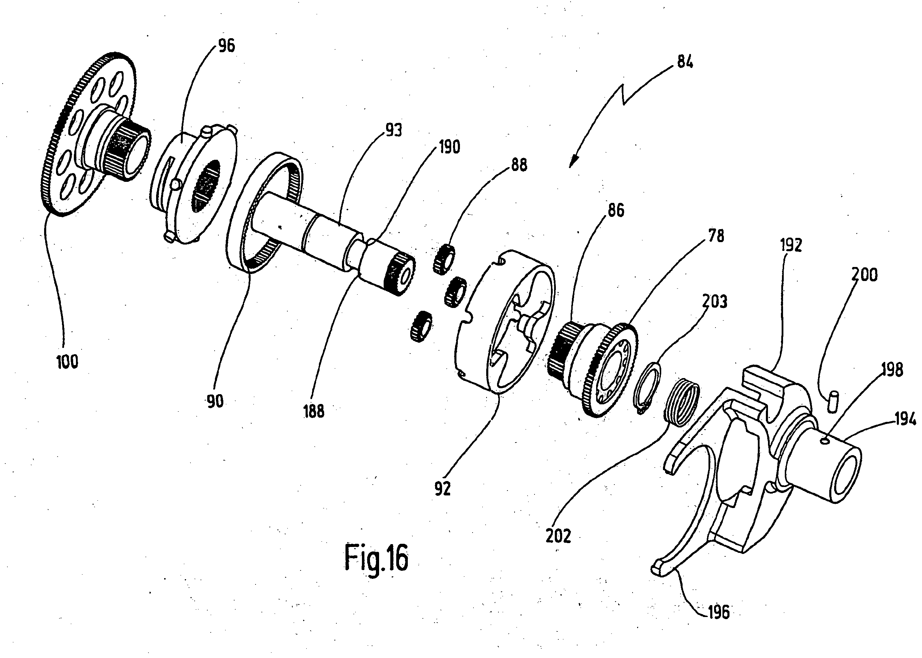

In Fig. 16 ist eine Explosionsdarstellung des Planetengetriebes 84 mit einer Schaltgabel zur Betätigung der Kupplung 124 dargestellt. Gleiche Elemente sind mit gleichen Bezugsziffern bezeichnet, wobei hier lediglich die Unterschiede dargestellt sind.

Die Hohlradwelle 93 weist eine Nut 188 auf, die zwei in Umfangsrichtung verlaufende Abschnitte aufweist. Die in Umfangsrichtung verlaufenden Abschnitte sind axial gegeneinander versetzt und verbunden durch einen Schrägabschnitt 190. Ferner weist die Schaltvorrichtung aus Fig. 16 eine Schaltgabel 192 auf, die einen Hülsenabschnitt 194 und einen Gabelabschnitt 196 aufweist. Der Hülsenabschnitt 194 weist eine Bohrung 198 auf, durch die hindurch ein Stift 200 einführbar ist. Ferner weist die Schaltvorrichtung eine Feder 202 auf, die zwischen dem angetriebenen Rad 78 und der Schaltgabel 192 angeordnet ist. Im zusammengesetzten Zustand ist der Hülsenabschnitt 194 im Bereich der Nut 188 gelagert, so dass der Stift 200, der durch die Bohrung 198 geführt wird, in die Nut 188 eingreift. Die Feder 202 stützt sich an einem Sicherungsring 203 ab und spannt die Schaltgabel 192 axial vor. Dadurch liegt der Stift 200 in der Nut 188 an einer Kante an, an der der Schrägabschnitt 190 gebildet ist.

Sofern mittels dieser Schaltvorrichtung ein Gang geschaltet wird, wird wie oben beschrieben die Hohlradwelle 93 um einen bestimmten Drehwinkel gedreht. Sofern die Drehung der Hohlradwelle 93 so ausgeführt wird, dass der Stift 200 über den Schrägabschnitt gleitet, wird die Schaltgabel je nach Drehrichtung der Hohlradwelle 93 axial verschoben. Durch diese axiale Verschiebung wird die Kupplung 124 betätigt, wie im Folgenden näher erläutert wird.

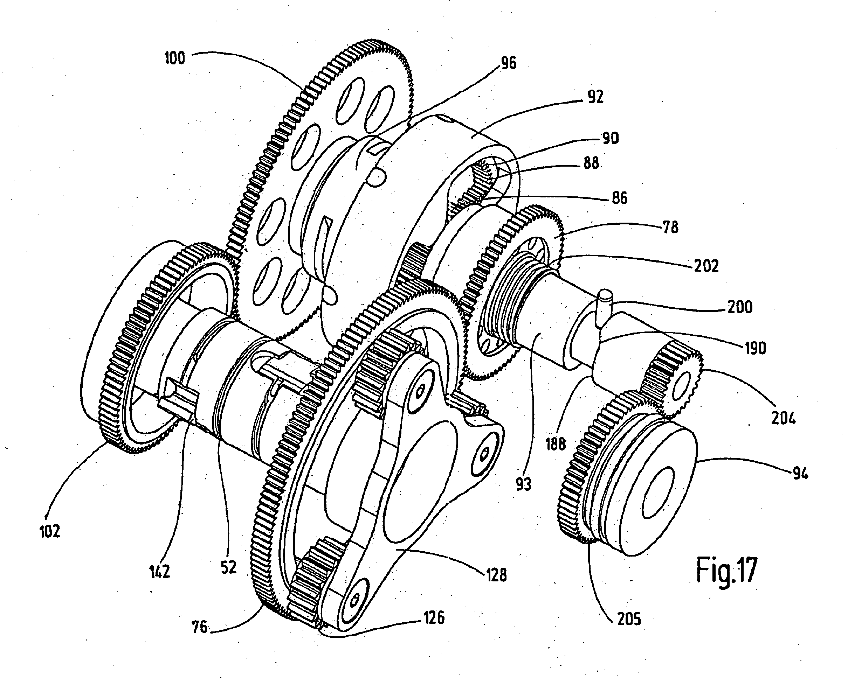

In Fig. 17 ist die Schaltvorrichtung nach Fig. 16 in zusammengebautem Zustand mit der Welle 52 und Teilen des Planetengetriebes 114 dargestellt. Gleiche Elemente sind mit gleichen Bezugsziffern bezeichnet, wobei hier lediglich die Unterschiede erläutert werden.

Die Hohlradwelle 93 weist einen Zahnradabschnitt 204 auf. Der Zahnradabschnitt 204 ist drehfest verbunden mit einem Antriebszahnrad 205 der Zugscheibe 94. Durch die Zugscheibe 94 und ein, durch den Zahnradabschnitt 204 und das Antriebszahnrad 205 gebildetes Zahnradpaar, kann eine definierte Drehung auf die Hohlradwelle 93 übertragen werden. Sofern der Stift 200 bei dieser Drehung über den Schrägabschnitt 190 gleitet, wird die in Fig. 17 nicht dargestellte Schaltgabel 192 in axialer Richtung bewegt. Dadurch kann die Kupplung 124 betätigt werden.

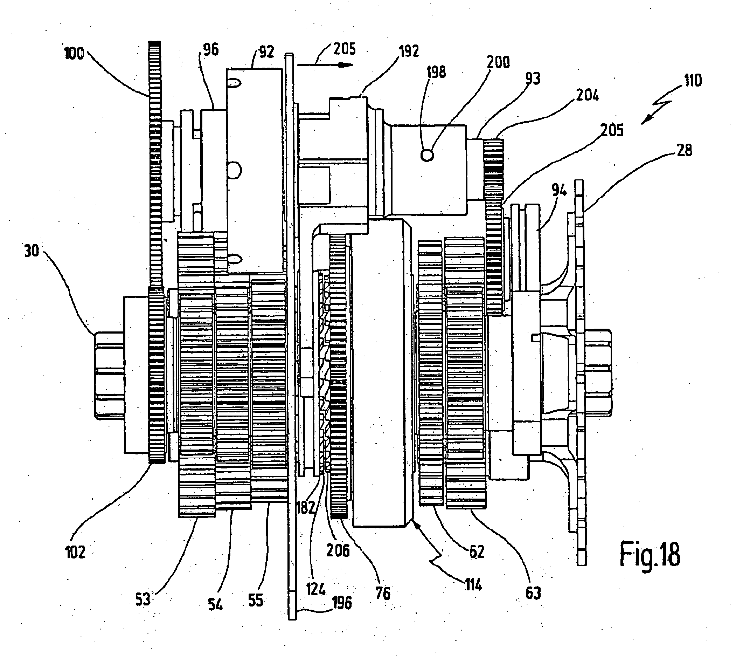

In Fig. 18 ist eine Seitenansicht der Getriebeeinheit 110 mit Schaltvorrichtung schematisch dargestellt. Gleiche Elemente sind mit gleichen Bezugsziffern bezeichnet, wobei hier lediglich die Unterschiede dargestellt sind.

Wie oben beschrieben, ist die Schaltgabel 192 durch Rotieren der Hohlradwelle 93 axial verschiebbar. Der Gabelabschnitt 196 ist verbunden mit dem Eingangsglied 182 der Kupplung 124. Sofern der Gabelabschnitt 196 in axialer Richtung verschoben wird, und zwar in Richtung eines Pfeils 205, wird das Eingangsglied 182 mit einem Ausgangsglied 206 der Kupplung 124 in Eingriff gebracht. So kann die Kupplung 124 durch Betätigen der Zugscheibe 94 betätigt werden. Dadurch, dass die Rotation des Schaltbolzens 174 direkt in Verbindung steht mit der Rotation der Hohlradwelle 93, ist es möglich, dass die Kupplung 124 betätigt wird, wenn das zugeordnete Teilgetriebe vom höchsten Gang in den ersten Gang weitergeschaltet wird.

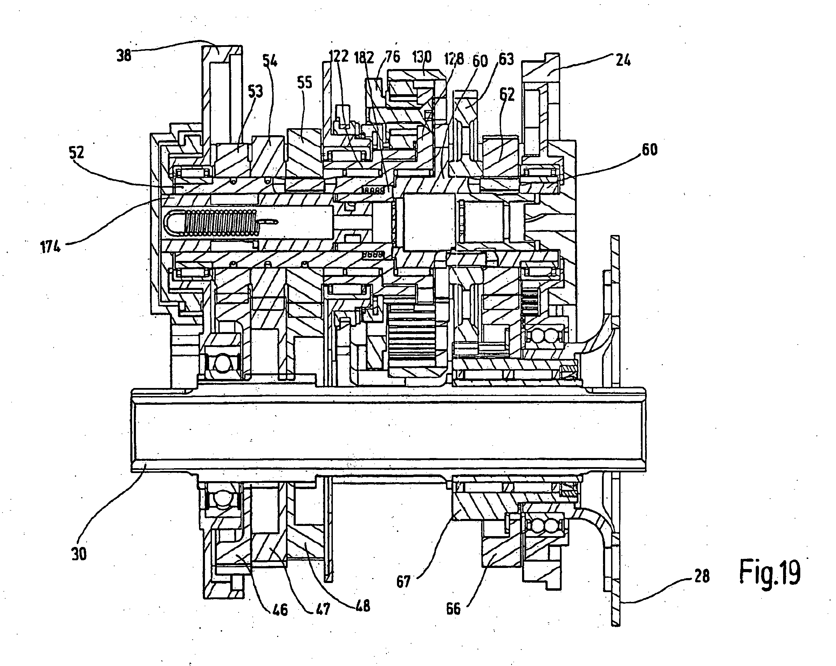

. In Fig. 19 ist eine schematische Schnittansicht der Getriebeeinheit 110 als Schnitt durch die Eingangswelle 30 und die Vorgelegewelle 52 dargestellt.

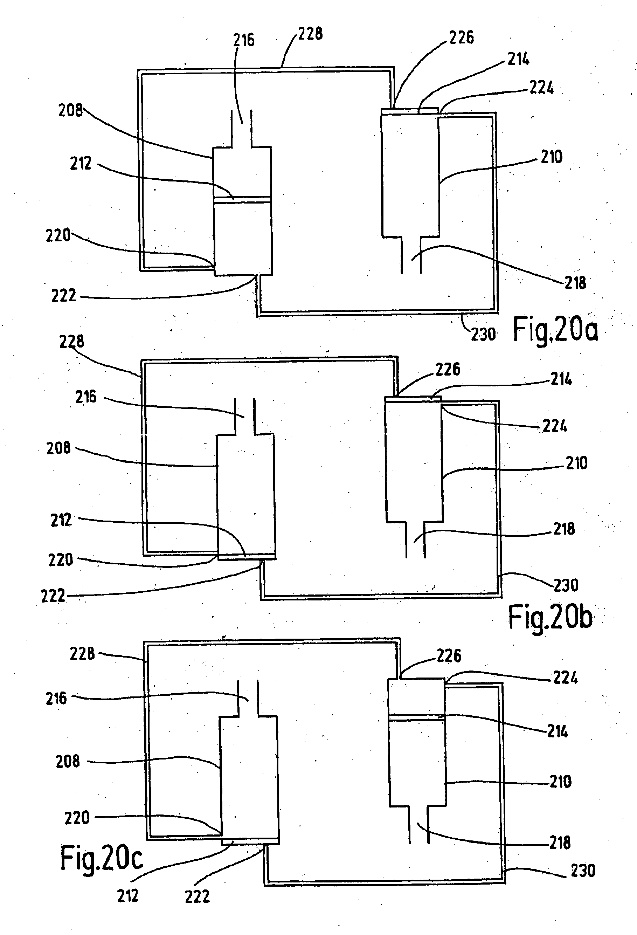

In den Fig. 20a-c ist ein Hydrauliksystem von in Reihe geschalteten Hydraulikzylindern schematisch dargestellt. Das Hydrauliksystem weist einen ersten Hydraulikzylinder 208 und einen zweiten Hydraulikzylinder 210 auf. In den Hydraulikzylinder 208, 210 ist jeweils ein Hydraulikkolben 212, 214 axial beweglich angeordnet. Die Hydraulikzylinder 208, 210 weisen jeweils eine Hauptöffnung 216, 218 und jeweils zwei Nebenöffnungen 220, 222, 224, 226 auf. Die Nebenöffnung 220 ist über einen Kanal 228 mit der Nebenöffnung 226 verbunden. Die Nebenöffnung 222 des ersten Hydraulikzylinders 208 ist über einen Kanal 230 mit der Nebenöffnung 224 des Hydraulikzylinders 210 verbunden. Die Nebenöffnungen 220, 222, 224, 226 sind jeweils den Hauptöffnungen 216, 218 gegenüberliegend angeordnet.

Sofern der erste Hydraulikzylinder 208 durch die Hauptöffnung 216 mit Hydraulikdruck beaufschlagt wird, bewegt sich der Hydraulikkolben 212 in Richtung der Nebenöffnungen 220, 222. Dadurch wird Hydraulikflüssigkeit durch die Nebenöffnung 222 und den Kanal 230 durch die Nebenöffnung 224 in den Hydraulikzylinder 210 geführt. Da die Nebenöffnung 224 unterhalb des Hydraulikkolbens 214 angeordnet ist, wird die Hydraulikflüssigkeit in den Hydraulikzylinder 210 gedrückt, ohne dass eine Kraft auf den Hydraulikkolben 214 ausgeübt wird. Die Hydraulikflüssigkeit verlässt den Hydraulikzylinder 210 durch die Hauptöffnung 218.

In Fig. 20b ist der Hydraulikkolben 212 an einem Ende des Hydraulikzylinders 208 angelangt. In dieser Position ist die Nebenöffnung 222 verschlossen und die Nebenöffnung 220 geöffnet, so dass Hydraulikflüssigkeit aus dem Hydraulikzylinder 208 durch den Kanal 228 gedrückt wird. Der Hydraulikdruck beaufschlagt in dieser Stellung den Hydraulikkolben 214 durch die Nebenöffnung 226. Durch diese Druckbeaufschlagung wird der Hydraulikkolben 214 in Richtung der Hauptöffnung 218 bewegt. Dies ist in Fig. 20c dargestellt.

Sofern nun der zweite Hydraulikzylinder 210 durch die Hauptöffnung 218 mit hydraulischem Druck beaufschlagt wird, bewegt sich zunächst der Hydraulikkolben 214 in Richtung der Nebenöffnung 226. Die Hydraulikflüssigkeit wird durch den Kanal 228 in den Hydraulikzylinder 208 geführt und durch die Hauptöffnung 216 aus dem Hydraulikzylinder 208 geleitet. Wenn der Hydraulikkolben 214 am Ende des Hydraulikzylinders 210 angelangt ist, wird der Hydraulikkolben 212 durch den Kanal 230 mit hydraulischem Druck beaufschlagt und wird in Richtung der Hauptöffnung 216 bewegt.

Durch diese Reihenschaltung von zwei Hydraulikzylindern können zwei Hydraulikkolben nacheinander bewegt werden.

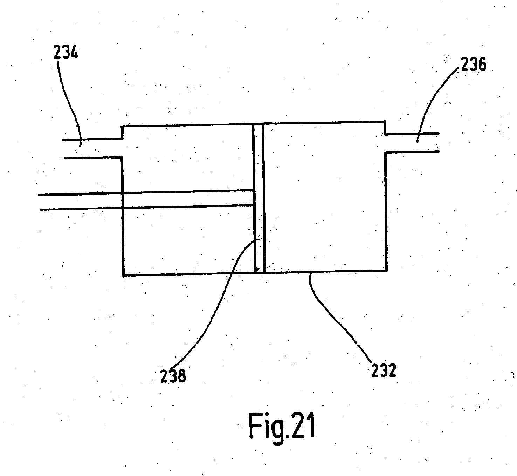

In Fig. 21 ist das Prinzip eines doppeltwirkenden Zylinders dargestellt. Fig. 21 zeigt einen Hydraulikzylinder 232, der eine Öffnung 234 und eine Öffnung 236 aufweist. Die Öffnungen 234, 236 sind an gegenüberliegenden Seiten des Hydraulikzylinders 232 angeordnet. Zwischen den Öffnungen 234, 236 befindet sich ein axial beweglicher Hydraulikkolben 238. Sofern Hydraulikdruck durch die Öffnung 234 in den Hydraulikzylinder 232 eingeleitet wird, bewegt sich der Hydraulikkolben 238 in Richtung der Öffnung 236. Durch die Öffnung 236 wird Hydrauliköl aus dem Hydraulikzylinder 232 ausgeleitet. Um den Hydraulikkolben 238 in eine entgegengesetzte Richtung zu bewegen und zwar in Richtung der Öffnung 234 wird Hydraulikdruck durch die Öffnung 236 in den Hydraulikzylinder 232 eingeleitet. Dadurch bewegt sich der Hydraulikkolben 238 in Richtung der Öffnung 234, durch die Hydrauliköl aus dem Hydraulikzylinder 232 ausgeleitet wird.

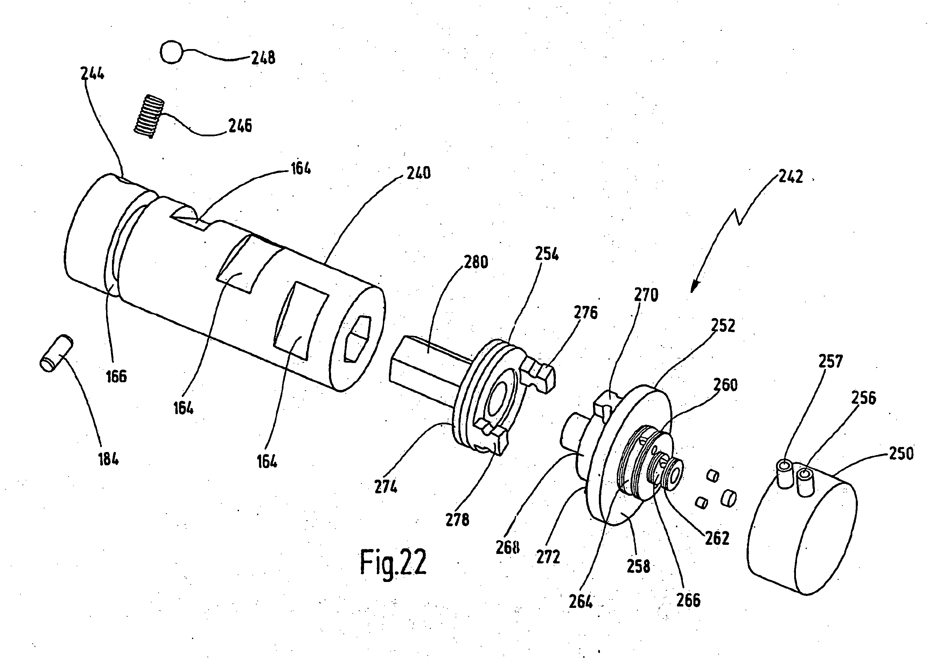

In Fig. 22 ist eine Explosionsdarstellung eines Schaltbolzens mit einem hydraulischen Antriebssystem dargestellt. Der Schaltbolzen ist allgemein mit 240 bezeichnet. Das Hydrauliksystem ist allgemein mit 242 bezeichnet.

Der Schaltbolzen 240 weist die Nut 166 auf, in die der Stift 184 eingreifen kann. In dem Schaltbolzen 240 ist eine radiale Bohrung 244 ausgebildet, die vorgesehen ist, eine Feder 246 und eine Kugel 248 aufzunehmen. Die Bohrung 244 bildet zusammen mit der Feder 246 und der Kugel 248 eine Rastvorrichtung.

In dem Schaltbolzen 240 sind die Betätigungsabschnitte 164 ausgebildet. Das hydraulische Antriebssystem 242 weist einen Hydraulikgeber 250, einen Hydrauliknehmer 252 und ein Stellglied 254 bzw. einen Flügelsteller 254 auf. Der Hydraulikgeber 250 weist zwei Hydraulikanschlüsse 256, 257 auf. Die Hydraulikanschlüsse sind dazu vorgesehen, mit Hydraulikschläuchen verbunden zu werden und das hydraulische Antriebssystem 242 mit hydraulischem Druck zu versorgen. Der Hydrauliknehmer weist eine Trennscheibe 258 auf. Auf einer dem Hydraulikgeber 250 zugewandten Seite der Trennscheibe 258 sind zwei rotationssymmetrische Anschlussglieder 260, 262 gebildet. Die Anschlussglieder 260, 262 weisen jeweils eine in Umfangsrichtung ausgebildete Nut 264, 266 auf. Auf der den Anschlussgliedern 260, 262 gegenüberliegenden Seite der Trennscheibe 258 ist ein zylindrischer Abschnitt 268 mit zwei radial hervorstehenden Nehmerflügeln 270, 272 ausgebildet. Das Stellglied weist einen zylindrischen Abschnitt 274 auf, an dem zwei Stellgliedflügel 276, 278 ausgebildet sind, die in axialer Richtung hervorstehen. Ferner weist das Stellglied 254 einen Verbindungsabschnitt280 auf. Der Verbindungsabschnitt 280 weist ein Sechskantprofil auf.

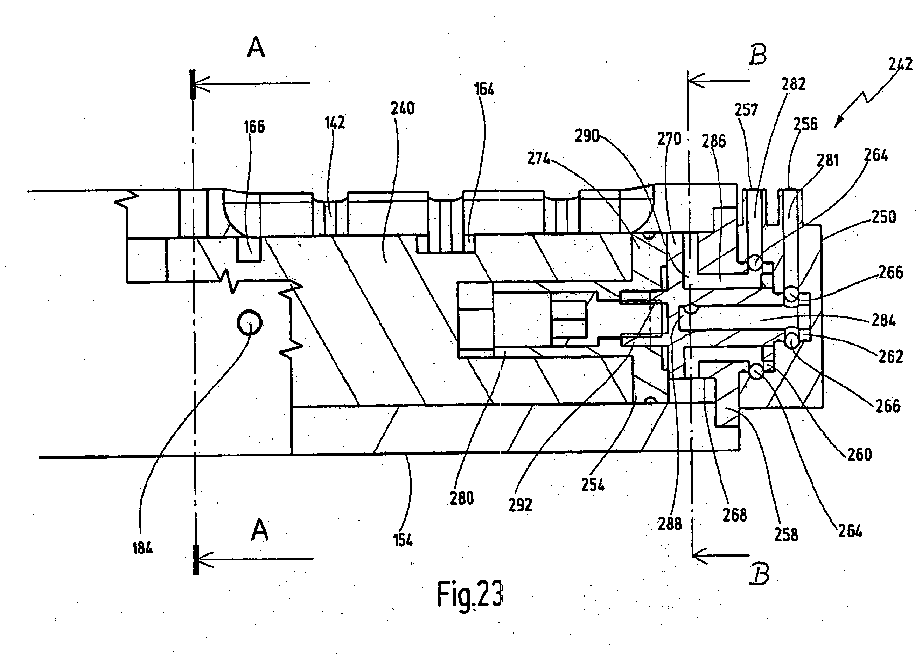

In Fig. 23 ist der Schaltbolzen 240, die Welle 154 und das hydraulische Antriebssystem 242 in einer axialen Schnittansicht dargestellt. In dieser Darstellung ist der Schaltbolzen 240 in der Welle 154 montiert.

Die Hydraulikanschlüsse 256, 257 sind verbunden mit jeweils einem Hydraulikkanal 281, 282. Die Hydraulikkanäle 281, 282 stehen in Verbindung mit den Nuten 264, 266. Die Nuten 264, 266 stehen in Verbindung mit Axialkanälen 284, 286, die in dem Hydrauliknehmer in axialer Richtung ausgebildet sind. Die Axialkanäle 284, 286 stehen in Verbindung mit Radialkanälen 288, 290, die in dem zylindrischen Abschnitt 268 gebildet sind. Die Radialkanäle 288, 290 sind in dem zylindrischen Abschnitt 268 in Umfangsrichtung derart positioniert, dass sie teilweise in den Nehmerflügeln 270, 272 ausgebildet sind. Ein Lagerbolzen 292 des Hydrauliknehmers ist in dem Stellglied 254 drehbar gelagert. Die Trennscheibe 258 ist mit der Welle 154 drehfest verbunden.

Der Verbindungsabschnitt 280 ist in einem Aufnahmeabschnitt des Schaltbolzens 240 drehfest gelagert.

Der Hydraulikgeber 250 ist an dem nicht dargestellten Getriebegehäuse festgelegt bzw. mit diesem verbunden. Der Hydrauliknehmer 252 ist relativ zu dem Hydraulikgeber 250 drehbar gelagert. Das Stellglied 254 ist relativ zu dem Hydrauliknehmer 252 drehbar gelagert. Dadurch, dass die Hydraulikkanäle 281, 282 mit den umlaufenden Nuten 262, 264 in Verbindung stehen, kann dem Hydrauliknehmer 252 unabhängig von der Rotationsposition relativ zu dem Hydraulikgeber 250 stets mit Hydraulikdruck beaufschlagt werden. Der Hydraulikdruck wird durch die Axialkanäle 284, 286 und die Radialkanäle 288, 290 Öffnungen im Bereich der Nehmerflügel zugeführt.

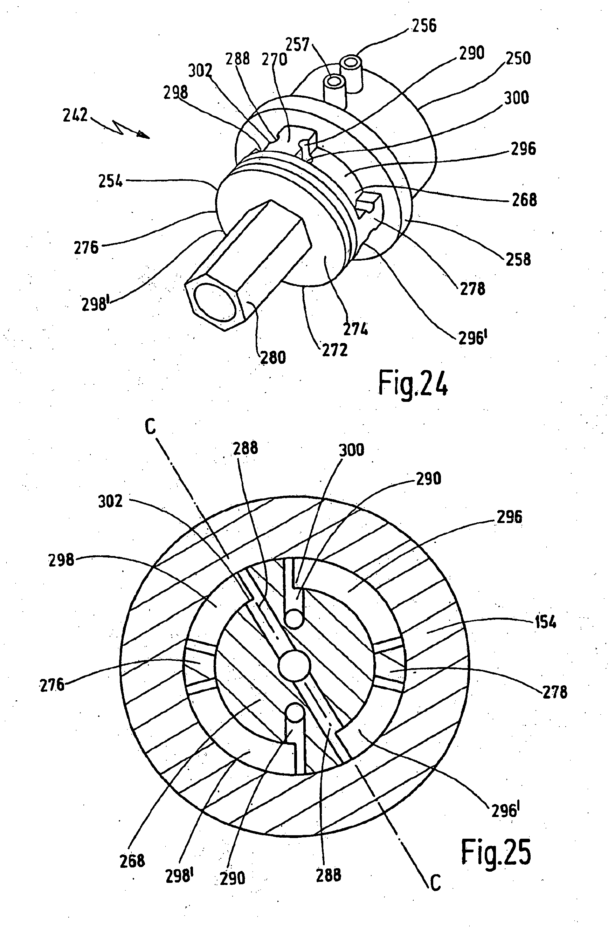

In Fig. 24 ist das hydraulische Antriebssystem 242 perspektivisch in einer Zusammenbauzeichnung dargestellt. Gleiche Elemente sind mit gleichen Bezugsziffern bezeichnet, wobei hier nur die Besonderheiten erklärt sind.

In dem in Fig. 24 dargestellten zusammengebauten Zustand des hydraulischen Antriebssystems 242 ist zwischen dem zylindrischen Abschnitt 274, der Trennscheibe 258, dem Nehmerflügel 270 und dem Stellgliedflügel 278 eine Hydraulikkammer 296 gebildet. Auf der gegenüberliegenden Seite des Nehmerflügels 270 ist eine weitere Hydraulikkammer 298 gebildet. Ebenso sind zwei weitere Hydraulikkammern 296', 298' auf gegenüberliegenden Seiten der Stellgliedflügel 278, 276 gebildet. An zwei Seiten der Nehmerflügel 270, 272 sind die Radialkanäle 288, 290 als zylindrische Nuten ausgebildet. Den Nehmerflügeln 270, 272 benachbart sind Öffnung 300, 302 ausgebildet, an denen die Radialkanäle 288, 290 münden.

Sofern durch den Hydraulikanschluss 257 ein Hydraulikdruck aufgebaut wird, gelangt die Hydraulikflüssigkeit durch die Öffnung 300 in die Hydraulikkammer 296. Der Hydraulikdruck übt eine Kraft auf den Stellgliedflügel 278 aus und bewegt diesen in Umfangsrichtung. Dadurch wird das Stellglied 254 gedreht und somit auch der mit dem Stellglied 254 verbundene Schaltbolzen. Da die Trennscheibe 258 drehfest mit der Welle 154 verbunden ist, wird so der Schaltbolzen 240 relativ zu der Welle 154 gedreht.

Sofern durch den Hydraulikanschluss 256 ein hydraulischer Druck zugeführt wird, gelangt Hydraulikflüssigkeit durch den Axialkanal 284 und den Radialkanal 288 zu der Öffnung 302 und in die Hydraulikkammer 298. Der Hydraulikdruck in der Hydraulikkammer 298 bewegt den Stellgliedflügel 276 und dreht somit den Schaltbolzen 240 in eine entgegengesetzte Richtung.

Das Funktionsprinzip des hydraulischen Antriebssystems 242 ist im Weiteren näher erläutert.

In Fig. 25 ist ein Schnitt entlang der Linie B-B aus Fig. 23 dargestellt. Gleiche Elemente sind mit gleichen Bezugsziffern bezeichnet, wobei hier lediglich die Unterschiede bzw. Besonderheiten beschrieben sind.

Zwischen der Welle 154 und dem zylindrischen Abschnitt 168 sind die Hydraulikkammern 296, 296', 298, 298' gebildet. Die Hydraulikkammern 296, 298' sind über die Radialkanäle 290 und den Axialkanal 286 mit dem Hydraulikanschluss 257 verbunden. Sofern an dem Hydraulikanschluss 257 hydraulischer Druck angelegt wird, wird in den Hydraulikkammern 296, 298' ein hydraulischer Druck aufgebaut und die Stellgliedflügel 276, 278 werden im Uhrzeigersinn gedreht. Entsprechend werden die Stellgliedflügel 276, 278 entgegen dem Uhrzeigersinn gedreht, sofern an dem Hydraulikanschluss 256 ein hydraulischer Druck angelegt wird.

Die in Fig. 25 dargestellten Hydraulikkammern 298, 298', 296, 296' arbeiten folglich nach dem Prinzip eines doppeltwirkenden Zylinders.

Es ist auch denkbar, dass die Stellgliedflügel 276, 278 unabhängig voneinander beweglich sind. Die Hydraulikkammern 298, 298' sind in dieser alternativen Ausführungsform in Reihe geschaltet mit den Hydraulikkammern 296, 296', so dass ein Hydrauliksystem verwirklicht wird, wie es schematisch in den Fig. 20a bis 20c erläutert ist. Dadurch könnte der Schaltbolzen 240 um einen doppelt so großen Drehwinkel gedreht werden. Die Kanäle 228, 230 sind dabei in dem Hydrauliknehmer 252 so angeordnet, dass die Kanäle 228, 230 genau dann geöffnet werden, wenn einer der Stellgliedflügel 276, 278 einen Anschlag erreicht hat. Dadurch ist sichergestellt, dass die Hydraulikkammern 296, 296', 298, 298' sequenziell gefüllt bzw. geleert werden.

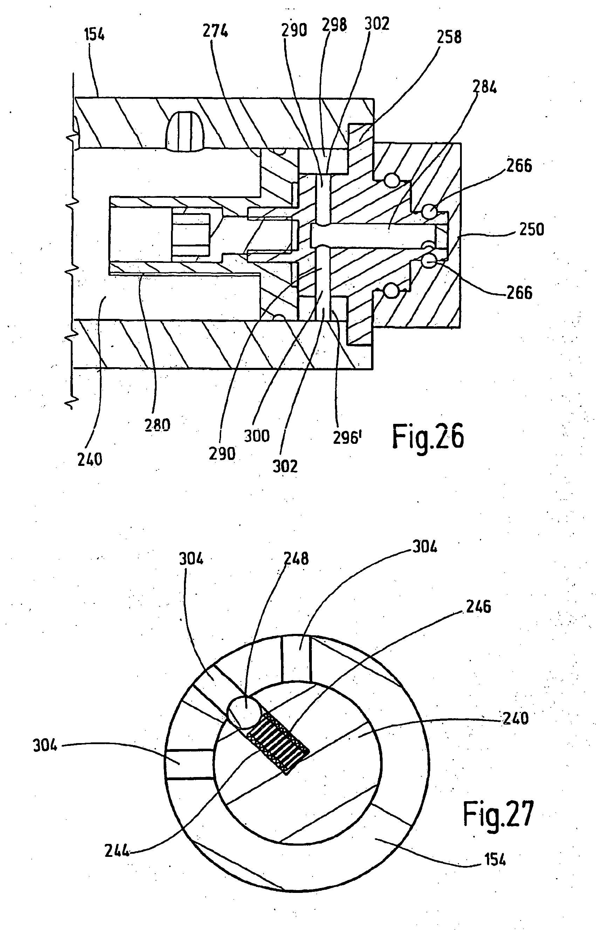

In Fig. 26 ist ein Schnitt durch das hydraulische Antriebssystem 242 entlang der Linie C-C dargestellt.

In Fig. 27 ist ein Schnitt entlang der Linie A-A aus Fig. 23 dargestellt. Fig. 27 zeigt die Rastvorrichtung, die durch die Kugel 248, die Feder 246 und Bohrungen 304 gebildet wird. Die Bohrungen sind an unterschiedlichen Umfangspositionen in der Welle 154 ausgebildet. Die Feder 246 übt eine Kraft auf die Kugel 248 aus. Die Kugel wird durch diese Kraft in die Bohrung 304 bzw. teilweise in die Bohrung 304 gedrückt und bildet so eine rastende Verbindung. Durch diese Rastvorrichtung rastet der Schaltbolzen 240 in vordefinierten Drehpositionen relativ zu der Welle 154 ein. Vorteilhafterweise muss ein vorbestimmtes Drehmoment auf den Schaltbolzen 240 ausgeübt werden, um die Rastvorrichtung zu lösen und den Schaltbolzen 240 relativ zu der Welle 154 zu drehen. Dadurch wird die relative Drehposition definiert und fixiert.

In einer alternativen Ausführungsform sind die Feder 246 und die Kugel 248 in einer Radialbohrung angeordnet, die in der Welle 154 ausgebildet ist. Dabei sind Bohrungen in unterschiedlichen Umgangspositionen in dem Schaltbolzen 240 ausgebildet, mit denen die Kugel 248 eine rastende Verbindung bildet.

Alternativ können die Freilaufkörper auch magnetisch betätigt werden. Dazu können die Betätigungsabschnitte 164 mit Permanentmagneten versehen sein. Alternativ kann der Schaltbolzen 156 mittels elektromagnetischen Aktuatoren betätigt werden.

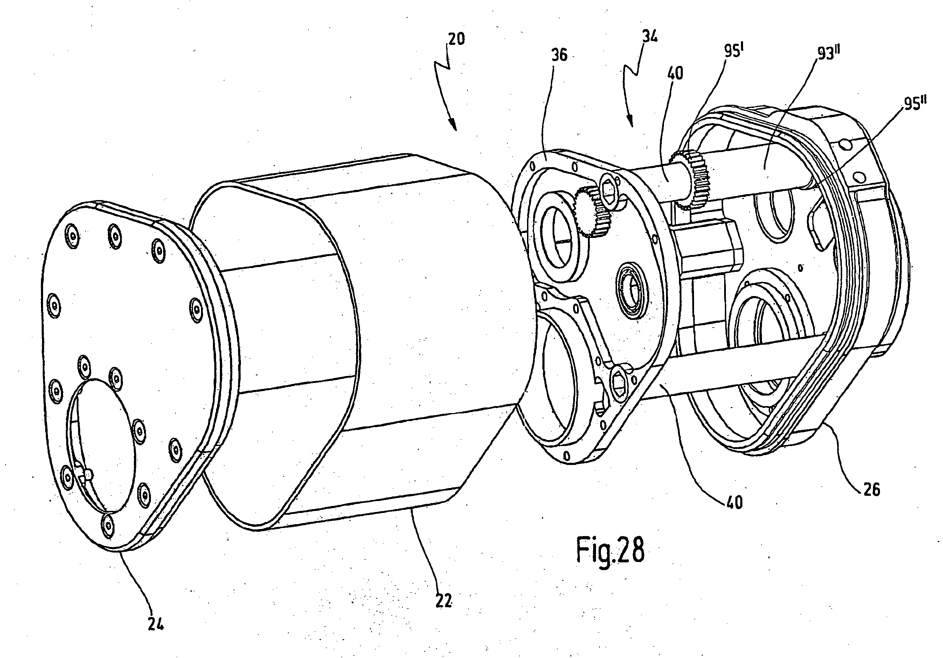

In Fig. 28 ist das Getriebegehäuse 20 in einer Explosionsdarstellung dargestellt. Der Getriebekäfig 34 ist dafür vorgesehen, die Getriebeeinheit 10, 110 aufzunehmen und zu lagern. Der Getriebekäfig 34 wird gebildet durch die Bolzen 40, die verbunden sind mit der Lagerplatte 36 und dem Gehäusedeckel 26. Vorteilhafterweise bildet der Gehäusedeckel 26 sowohl einen Abschluss des Gehäusemantels 22 als auch die Lagerplatte 36 für den Getriebekäfig 34. Vorzugsweise kann auch die Lagerplatte 36 mit dem Gehäusedeckel 24 einstückig ausgebildet sein, so dass eine weitere Gewichtsersparnis erzielt wird.

In einer alternativen Ausführungsform können die Getriebeeinheiten 10, 110 auch mit einem axial verschiebbaren Schaltbolzen geschaltet werden. Die Schaltklinken 142 sind bei dieser alternativen Ausführungsform ähnlich bzw. identisch ausgebildet wie bei der Schaltvorrichtung 70, 104 mit drehbaren Schaltbolzen 156. Der axial verschiebbare Schaltbolzen weist Ausnehmungen mit Schrägabschnitten auf, wobei die Ausnehmungen unter den Betätigungsabschnitten 144 angeordnet werden, so dass die vorgespannten Schaltklinken 142 ausschwenken. Das Eingreifen der Schaltklinken 142 in die Innenverzahnung 136 erfolgt wie bei dem drehbaren Schaltbolzen 156. Die Schrägabschnitte der Ausnehmungen dienen dazu, dass die Betätigungsabschnitte 144 der Schaltklinken 142 leichter aus der Ausnehmung herausgleiten können und somit der Eingriffsabschnitt 148 nach radial innen geschwenkt werden kann. Wie bei dem drehbaren Schaltbolzen 156 sind die Ausnehmungen derart an dem Schaltbolzen angeordnet, dass zwei Gänge gleichzeitig eingeschaltet sind und somit der sogenannte Zwischenzustand eingestellt wird, wenn von einem Gang in den anderen Gang geschaltet wird. Dadurch ist auch in dieser Ausführungsform ein Schalten unter Last möglich. Der axial verschiebbare Schaltbolzen kann durch einen Schaltzug betätigt werden. Der stehende bzw. nicht rotierende Schaltzug wird mittels eines Gleit- oder Wälzlagers von dem sich drehenden Schaltbolzen entkoppelt. Alternativ kann der Schaltzug an eine drehende Scheibe angeschlossen sein, welche über eine Nutführung mit dem Schaltbolzen verbunden ist. Dabei greift ein Stift in eine schräg verlaufende Nut, die in der drehenden Scheibe ausgebildet ist. Der Schaltzug ist an der drehenden Scheibe angeschlossen. Die Scheibe wird durch den Schaltzug gedreht und durch den in der Nut geführten Stift wird die Drehbewegung der Scheibe in eine Axialbewegung des Schaltbolzens umgesetzt. Alternativ kann der Stift an der Scheibe festgelegt sein und die Nut in dem Schaltbolzen ausgebildet sein.

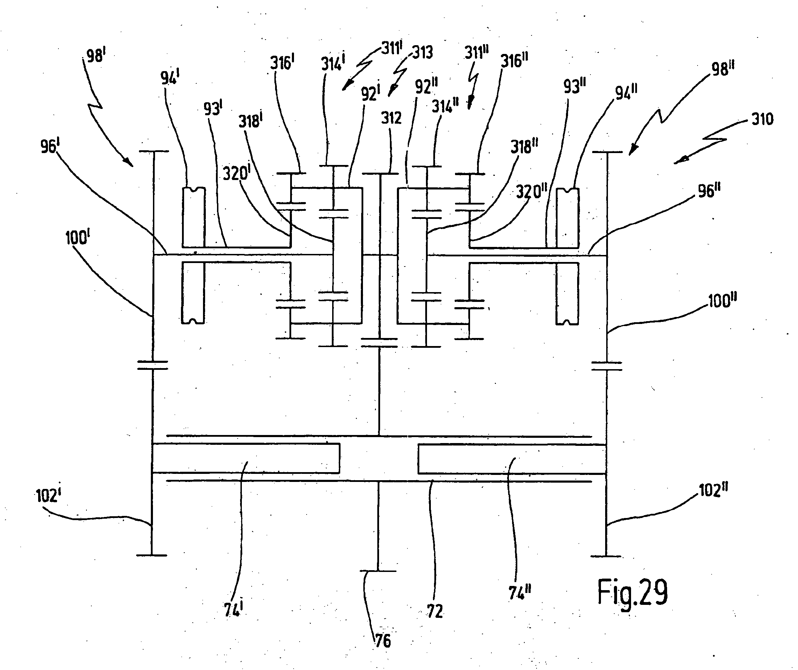

Fig. 29 zeigt einen Schaltplan einer Schaltvorrichtung mit zwei drehbaren Schaltbolzen. Die in Fig. 29 dargestellte Schaltvorrichtung ist eine alternative Ausführungsform zu der in Fig. 4 dargestellten Schaltvorrichtung 104 und ist allgemein mit 310 bezeichnet. Gleiche Elemente sind mit gleichen Bezugsziffern bezeichnet, wobei hier lediglich die Unterschiede erläutert sind.

Das Antriebsrad 76 ist mit einem angetriebenen Rad 312 drehfest verbunden. Das angetriebene Rad 312 ist verbunden mit zwei Planetengetrieben 311', 311". Das Antriebsrad 76 bildet mit dem angetriebenen Rad 312 ein Übemagergetriebe 313. Das angetriebene Rad 312 ist mit den Planetenträgern 92', 92" der Planetengetriebe 311', 311" drehfest verbunden. An den Planetenträgern 92', 92" sind Planetenradsätze gelagert. Die Planetenradsätze sind jeweils gebildet durch ein erstes Planetenrad 314 und ein zweites Planetenrad 316. Das erste Planetenrad 314 ist jeweils mit dem zweiten Planetenrad 316 drehfest verbunden. Ein erstes Sonnenrad 318 ist koaxial zu dem Planetenträger 92 angeordnet und kämmt mit den ersten Planetenrädern 314. Das erste Sonnenrad 318 ist drehfest verbunden mit der Abtriebswelle 96, die drehfest mit dem Antriebsrad 100 des Übertragergetriebes 98 verbunden ist. Koaxial zu dem Sonnenrad 318 ist ein zweites Sonnenrad 320 gelagert, das mit den zweiten Planetenrädern 316 kämmt. Das zweite Sonnenrad 320 ist drehfest verbunden mit der Hohlradwelle 93, die mit der Zugscheibe 94 verbunden ist. Das erste Sonnenrad 318 und die ersten Planetenräder 314 bilden ein erstes Übersetzungsverhältnis, das sich von einem zweiten Übersetzungsverhältnis des zweiten Sonnenrades 320 mit den zweiten Planetenrädern 316 unterscheidet.

Die Rotation der Welle 72 wird über das Antriebsrad 76 auf das angetriebene Rad 312 übertragen. Das angetriebene Rad 312 treibt die Planetengetriebe 311', 311" an. Dabei wird der Planetenträger 92 angetrieben, an dem die Planetenradsätze gelagert sind. Die Planetengetriebe 311', 311" sind als Stufenplanetengetriebe ausgebildet. Das erste Sonnenrad 318 kämmt mit den ersten Planetenrädern 314 und bildet den Abtrieb der Planetengetriebe 311', 311". Sofern die Zugscheibe 94 nicht betätigt wird und somit das zweite Sonnenrad 320 in Ruhe ist, wird die Rotation der Welle 72 über das Übertragergetriebe 313, die Planetengetriebe 311', 311" und die zweiten Übertragergetriebe 98', 98" auf die Schaltbolzen 74', 74" übertragen. In diesem Zustand ist die Übersetzung gerade eins, so dass sich die Schaltbolzen 74', 74" synchron zu der Welle 72 bzw. mit derselben Drehzahl wie die Welle 72 drehen. Als weiteres Antriebsrad der Planetengetriebe 311', 311" dient das zweite Sonnenrad 320. Eine Rotation des Sonnenrades 320 wird folglich zu der Rotation des angetriebenen Rades 312 addiert, so dass eine Rotation der Zugscheibe 94 auf den Schaltbolzen 74 übertragbar ist.

Die Funktionsweise der Schaltvorrichtung 310 ist folglich identisch mit der Funktionsweise der Schaltvorrichtung 104 aus Fig. 5.

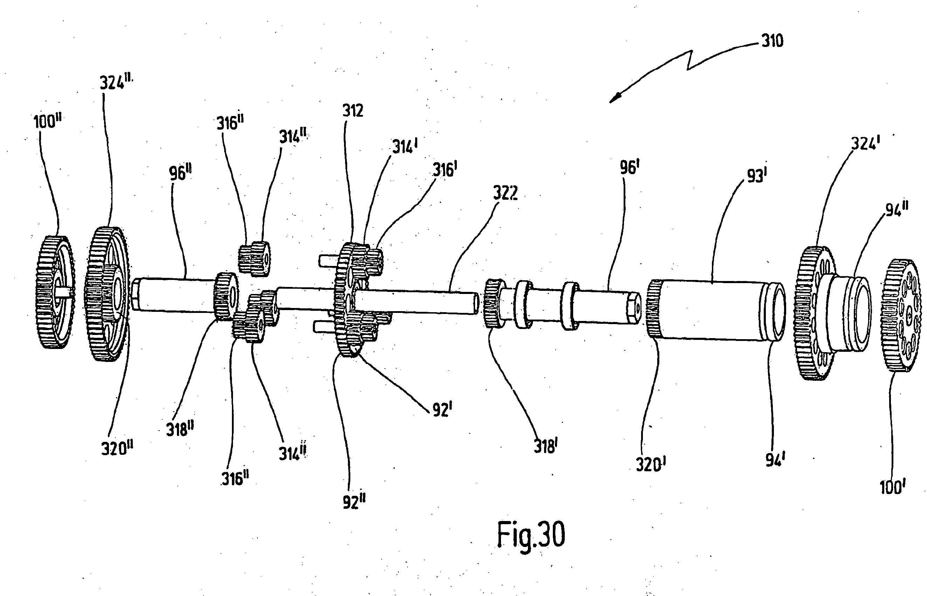

In Fig. 30 ist eine Explosionsdarstellung der Schaltvorrichtung 310 dargestellt. Gleiche Elemente sind mit gleichen Bezugsziffern bezeichnet, wobei hier lediglich die Unterschiede bzw. die Besonderheiten dargestellt sind.

Das angetriebene Rad 312 und die Planetenträger 92', 92" sind als ein Zahnrad mit Lagerungslöchern und Lagerungsstiften ausgebildet. Das Antriebsrad 312 ist mittels eines Kugellagers an einer Lagerwelle 322 drehbar gelagert. Die Planeten sind gebildet aus den Planetenrädern 314 und 316, die unterschiedliche Durchmesser bzw. Zahnzahlen aufweisen. Das erste Sonnenrad 318' ist als Außenverzahnung an der als Hohlwelle ausgebildeten Abtriebswelle 96' ausgebildet. Das zweite Sonnenrad 320' ist als Außenverzahnung an der als Hohlwelle ausgebildeten Hohlradwelle 93' ausgebildet. Die Abtriebswelle ist mit dem Antriebsrad 100' des Übertragergetriebes 98' verbindbar. Die Hohlradwelle 93' ist drehfest mit der Zugscheibe 94' verbunden. Die Lagerwelle 322, die Abtriebswelle 96' und die Hohlradwelle 93' sind derart ausgebildet, dass sie koaxial ineinander angeordnet bzw. gelagert werden können.

Das erste Sonnenrad 318" ist als Außenverzahnung der Abtriebswelle 96" ausgebildet. Die Abtriebswelle 96" ist mit dem Antriebsrad 100" drehfest verbindbar. Das zweite Sonnrad 320" ist als Außenverzahnung ausgebildet und mit einem Zahnrad 324" verbunden, wobei das zweite Sonnenrad 320" und das Zahnrad 324" vorzugsweise einstückig ausgebildet sind. Das Zahnrad 324" kämmt mit dem Zahnrad 95 aus Fig. 14, das drehfest mit der Hohlradwelle 93" verbunden ist.

Alternativ kann die Hohlradwelle 93" mit einem weiteren Zahnrad 95" aus Fig. 28 verbunden sein. Das Zahnrad 95" kämmt dann mit einem Zahnrad 324", das drehfest mit der Zugscheibe 94" verbunden ist. Dadurch können beide Zugscheiben 94', 94" koaxial auf einer Seite der Getriebeeinheit angeordnet werden.

Durch diese in Fig. 30 dargestellte Anordnung sind zwei Stufenplanetengetriebe gebildet, die zur Rotation der Schaltbolzen 74', 74" dienen.

## Patentansprüche

1. Schaltvorrichtung (104; 310) für eine Getriebeeinheit (10; 110) eines mit Muskelkraft betriebenen Fahrzeugs, mit einer ersten Welle (72; 154), an der eine Mehrzahl von Losrädern (53, 54, 55, 56, 57, 58, 62, 63, 64) gelagert ist, einer entsprechenden Anzahl von Zahnrädern (46-51, 66-68), die an wenigstens einer zweiten Welle (30, 32) gelagert sind, wobei die Losräder jeweils mittels Schaltmitteln (142) mit der ersten Welle (72; 154) verbindbar sind, wobei die erste Welle (72; 154) als Hohlwelle ausgebildet ist und einen oder zwei koaxial innenliegende Schaltbolzen (74; 156; 174, 240) aufweist, **dadurch gekennzeichnet, dass** der oder die Schaltbolzen (74; 156; 174; 240) mit Antriebsmitteln (84; 242) verbunden ist oder sind, die dazu ausgelegt sind, den oder die Schaltbolzen (74; 156; 174; 240) zu rotieren, um die Schaltmittel (142) zu betätigen, wobei die Antriebsmittel (84; 311) ein Drehzahlüberlagerungsgetriebe (84; 311) aufweisen, das als Planetengetriebe (84; 311) ausgebildet ist, wobei die Schaltmittel (142) als schaltbare Freiläufe (142) ausgebildet sind und an dem oder den Schaltbolzen (74; 156; 174; 240) Betätigungsabschnitte (164) ausgebildet sind, mittels derer die Freiläufe (142) betätigbar sind, wobei die Betätigungsabschnitte (164) an dem oder den Schaltbolzen (74; 156; 174; 240) derart angeordnet sind, dass die Freiläufe (142) von zwei aufeinanderfolgenden Gangstufen gleichzeitig betätigbar sind.

2. Schaltvorrichtung nach Anspruch 1, wobei die Antriebsmittel (84; 242; 311) dazu ausgelegt sind, den entsprechenden Schaltbolzen (74; 156; 104; 240) synchron zu der ersten Welle (72) zu rotieren, um einen Schaltzustand beizubehalten und den Schaltbolzen (74; 156; 174; 240) relativ zu der ersten Welle (72) zu rotieren, um einen Gangwechsel auszuführen.

3. Schaltvorrichtung nach Anspruch 1 oder 2, wobei die Schaltbolzen (74; 156; 174; 240) verschiedenen der Losräder (53-64) zugeordnet sind und wobei die Antriebsmittel (84; 242) dazu ausgebildet sind, die Schaltbolzen (74; 156; 174; 240) relativ zueinander zu rotieren, um Schaltmittel (142) der jeweils zugeordneten Losräder (53-64) separat zu betätigen.

4. Schaltvorrichtung nach einem der Ansprüche 1 bis 3, wobei die zwei Schaltbolzen unabhängig voneinander rotierbar sind.

5. Schaltvorrichtung nach Anspruch 1 bis 4, wobei die erste Welle (72; 154) drehfest mit einem Sonnenrad (86) des Planetengetriebes (84) und der Schaltbolzen (74; 156; 174) drehfest mit einem Planetenträger (92) des Planetengetriebes (84) verbunden ist und wobei eine Rotation eines Hohlrades (90) des Planetengetriebes (84) als Rotation des Schaltbolzens (74; 156; 174) relativ zu der ersten Welle (74; 154) übertragbar ist.

6. Schaltvorrichtung nach Anspruch 1 bis 5, wobei das Drehzahlüberlagerungsgetriebe (84; 311) axial versetzt zu der ersten Welle (72; 154) angeordnet ist.

7. Schaltvorrichtung nach einem der Ansprüche 1 bis 4, wobei die Schaltbolzen (74; 156; 174; 240) jeweils mit einem Drehzahlüberlagerungsgetriebe (84; 311) verbunden sind, und wobei die Drehzahlüberlagerungsgetriebe (84; 311) koaxial zueinander und axial versetzt zu der ersten Welle (72; 154) angeordnet sind.

8. Schaltvorrichtung nach einem der Ansprüche 1 bis 7, wobei die Betätigungsabschnitte (164) als Ausnehmungen (164) in dem bzw. in den Schaltbolzen (74; 156; 174; 240) ausgebildet sind.

9. Schaltvorrichtung nach einem der Ansprüche 1 bis 8, wobei jedem Losrad (53-58, 62-64) eine Mehrzahl von Freilaufklinken (142) zugeordnet ist und wobei die Freilaufklinken (142) eines Freilaufs (142) derart über den Umfang der Welle (72; 154) verteilt sind, dass nur eine der Freilaufklinken (142) gleichzeitig mit dem Losrad (53-58, 62-64) in Eingriff bringbar ist.

10. Schaltvorrichtung nach einem der Ansprüche 1 bis 9, wobei die Betätigungsabschnitte (164) derart ausgebildet sind, dass nur entsprechend geformte Freiläufe (142) betätigbar sind.

11. Schaltvorrichtung nach einem der Ansprüche 1 bis 8, wobei der oder wenigstens einer der Schaltbolzen (74; 156; 174; 240) axial verschieblich ausgebildet ist.

12. Getriebeeinheit (10; 110) für ein mit Muskelkraft angetriebenes Fahrzeug, mit einer Eingangswelle (30), einer Ausgangswelle (32) und einer Vorgelegewelle (52) und mit einer Schaltvorrichtung (70; 104) nach einem der Ansprüche 1 bis 11.

## Claims

1. Shifting device (104; 310) for a transmission unit (10; 110) of a vehicle operated by muscle force, having a first shaft (72; 154) on which a plurality of idler gears (53, 54, 55, 56, 57, 58, 62, 63, 64) is mounted, a corresponding number of gearwheels (46-51, 66-68), which are mounted on at least one second shaft (30, 32), wherein the idler gears can each be connected to the first shaft (72; 154) by means of shifting means (142), wherein the first shaft (72; 154) is formed as a hollow shaft and has one shifting pin (74) or two shifting pins (74; 156; 174, 240) which lie coaxially on the inside, **characterized in that** the shifting pin (74) is or the shifting pins (74; 156; 174; 240) are connected to drive means (84; 242) which are configured to rotate the shifting pin (74) or the shifting pins (74; 156; 174; 240) in order to actuate the shifting means (142), wherein the drive means (84; 311) have a rotational speed super-imposition transmission (84; 311), which is formed as a planetary gear mechanism (84; 311), wherein the shifting means (142) are formed as shiftable freewheels (142), and wherein the shifting pin (74) has or the shifting pins (74; 156; 174; 240) have actuation portions (164) by means of which the freewheels (142) can be actuated, wherein the actuation portions (164) are arranged on the shifting pin (74) or the shifting pins (74; 156; 174; 240) in such a way that the freewheels (142) of two successive gear stages can be actuated simultaneously.

2. Shifting device as claimed in claim 1, wherein the drive means (84; 242; 311) are configured to rotate the corresponding shifting pin (74; 156; 104; 240) synchronously with respect to the first shaft (72) in order to maintain a shifted state and to rotate the shifting pin (74; 156; 174; 240) in relation to the first shaft (72) in order to carry out a gear change.

3. Shifting device as claimed in claim 1 or 2, wherein the shifting pins (74; 156; 174; 240) are associated to different of the idler gears (53-64) and wherein the drive means (84; 142) are configured to rotate the shifting pins (74; 156; 174; 240) with respect to one another in order to actuate shifting means (142) of the respectively associated idler gears (53-64) separately.

4. Shifting device as claimed in any of claims 1 to 3, wherein the two shifting pins can be rotated independently of one another.

5. Shifting device as claimed in claim 1 to 4, wherein the first shaft (72; 154) is connected in a rotationally fixed fashion to a sun gear (86) of the planetary gear mechanism (84), and the shifting pin (74; 156; 174) is connected in a rotationally fixed fashion to a planetary carrier (92) of the planetary gear mechanism (84), and wherein rotation of a ring gear (90) of the planetary gear mechanism (84) can be transmitted as rotation of the shifting pin (74; 156; 174) in relation to the first shaft (74; 154).

6. Shifting device as claimed in claim 1 to 5, wherein the rotational speed super-imposition transmission (84; 311) is displaced in an axial direction with respect to the first shaft (72; 154).

7. Shifting device as claimed in any of claims 1 to 4, wherein the shifting pins (74; 156; 174; 240) are each connected to one rotational speed super-imposition transmission (84; 311), and wherein the rotational speed super-imposition transmissions (84; 311) are arranged coaxially to each other and are displaced in an axial direction with respect to the first shaft (72; 154).

8. Shifting device as claimed in any of claims 1 to 7, wherein the actuation portions (164) are formed as recesses (164) in the shifting pin (74) or the shifting pins (74; 156; 174; 240).

9. Shifting device as claimed in one of claims 1 to 8, wherein a plurality of freewheeling pawls (142) is assigned to each idler gear (53-58, 62-64), and wherein the freewheeling pawls (142) of one freewheel (142) are distributed over the circumference of the shaft (72; 154) in such a way that just one of the freewheeling pawls (142) can be placed in engagement simultaneously with the idler gear (53-58, 62-64).

10. Shifting device as claimed in one of claims 1 to 9, wherein the actuation portions (164) are formed in such a way that only correspondingly shaped freewheels (142) can be actuated.

11. Shifting device as claimed in one of claims 1 to 8, wherein the shifting pin (74) is or at least one of the shifting pins (74; 156; 174; 240) are axially displaceable.

12. A transmission unit (10; 110) for a vehicle driven by muscle force, having an input shaft (30), an output shaft (32) and a counter shaft (52) and having a shifting device (70; 104) according to one of the claims 1 to 11.

## Revendications

1. Dispositif de changement de vitesse (104 ; 310) pour une unité de transmission (10 ; 110) d'un véhicule fonctionnant avec la force musculaire, comprenant un premier arbre (72 ; 154), sur lequel est montée une pluralité de pignons fous (53, 54, 55, 56, 57, 58, 62, 63, 64), un nombre correspondant de roues dentées (46-51, 66-68), qui sont montées sur au moins un deuxième arbre (30, 32), les pignons fous pouvant être connectés à chaque fois par le biais de moyens de commutation (142) au premier arbre (72 ; 154), le premier arbre (72 ; 154) étant réalisé sous forme d'arbre creux et présentant un ou plusieurs boulons de commutation (74 ; 156 ; 174, 240) situés coaxialement à l'intérieur, **caractérisé en ce que** le ou les boulons de commutation (74 ; 156 ; 174 ; 240) est ou sont connectés à des moyens d'entraînement (84 ; 242) qui sont conçus de manière à faire tourner le ou les boulons de commutation (74 ; 156 ; 174 ; 240), afin d'actionner les moyens de commutation (142), les moyens d'entraînement (84 ; 311) présentant une transmission à superposition de vitesse de rotation (84 ; 311) qui est réalisée sous forme de transmission planétaire (84 ; 311), les moyens de commutation (142) étant réalisés sous forme de roues libres commutables (142) et des sections d'actionnement (164) étant réalisées sur le ou les boulons de commutation (74 ; 156 ; 174 ; 240), lesquelles actionnant les roues libres (142), les sections d'actionnement (164) étant disposées sur le ou les boulons de commutation (74 ; 156 ; 174 ; 240) de telle sorte que les roues libres (142) de deux rapports de vitesse successifs puissent être actionnées simultanément.

2. Dispositif de changement de vitesse selon la revendication 1, dans lequel les moyens d'entraînement (84 ; 242 ; 311) sont conçus de manière à faire tourner le boulon de commutation correspondant (74 ; 156 ; 174 ; 240) de manière synchronisée avec le premier arbre (72), afin de conserver un état de commutation, et de faire tourner le boulon de commutation (74 ; 156 ; 174 ; 240) par rapport au premier arbre (72) de manière à effectuer un changement de vitesse.

3. Dispositif de changement de vitesse selon la revendication 1 ou 2, dans lequel les boulons de commutation (74 ; 156 ; 174 ; 240) sont associés à différents pignons fous des pignons fous (53-64) et dans lequel les moyens d'entraînement (84 ; 242) sont réalisés de manière à faire tourner les boulons de commutation (74 ; 156 ; 174 ; 240) les uns par rapport aux autres, afin d'actionner séparément des moyens de commutation (142) des pignons fous respectivement associés (53-64).

4. Dispositif de changement de vitesse selon l'une quelconque des revendications 1 à 3, dans lequel les deux boulons de commutation peuvent être tournés indépendamment l'un de l'autre.

5. Dispositif de changement de vitesse selon les revendications 1 à 4, dans lequel le premier arbre (72 ; 154) est connecté de manière solidaire en rotation à une roue solaire (86) de la transmission planétaire (84) et le boulon de commutation (74 ; 156 ; 174) est connecté de manière solidaire en rotation à un porte-satellites (92) de la transmission planétaire (84) et dans lequel une rotation d'une couronne (90) de la transmission planétaire (84) peut être transmise sous forme de rotation du boulon de commutation (74 ; 156 ; 174) par rapport au premier arbre (74 ; 154).

6. Dispositif de changement de vitesse selon les revendications 1 à 5, dans lequel la transmission à superposition de vitesse de rotation (84 ; 311) est disposée de manière décalée par rapport au premier arbre (72 ; 154).

7. Dispositif de changement de vitesse selon l'une quelconque des revendications 1 à 4, dans lequel les boulons de commutation (74 ; 156 ; 174 ; 240) sont connectés à chaque fois à une transmission à superposition de vitesse de rotation (84 ; 311), et dans lequel les transmissions à superposition de vitesse de rotation (84 ; 311) sont disposées coaxialement les unes par rapport aux autres et de manière décalée axialement par rapport au premier arbre (72 ; 154).

8. Dispositif de changement de vitesse selon l'une quelconque des revendications 1 à 7, dans lequel les sections d'actionnement (164) sont réalisées sous forme d'évidements (164) dans le ou les boulons de commutation (74 ; 156 ; 174 ; 240).

9. Dispositif de changement de vitesse selon l'une quelconque des revendications 1 à 8, dans lequel une pluralité de cliquets de roue libre (142) est associée à chaque pignon fou (53-58, 62-64) et dans lequel les cliquets de roue libre (142) d'une roue libre (142) sont répartis sur la périphérie de l'arbre (72 ; 154) de telle sorte que seulement l'un des cliquets de roue libre (142) puisse être amené en prise simultanément avec le pignon fou (53-58, 62-64).

10. Dispositif de changement de vitesse selon l'une quelconque des revendications 1 à 9, dans lequel les sections d'actionnement (164) sont réalisées de telle sorte que seulement des roues libres formées de manière correspondante (142) puissent être actionnées.

11. Dispositif de changement de vitesse selon l'une quelconque des revendications 1 à 8, dans lequel le ou au moins l'un des boulons de commutation (74 ; 156 ; 174 ; 240) est réalisé de manière déplaçable axialement.

12. Unité de transmission (10 ; 110) pour un véhicule entraîné par la force musculaire, comprenant un arbre d'entrée (30), un arbre de sortie (32) et un arbre intermédiaire (52) et comprenant un dispositif de changement de vitesse (70 ; 104) selon l'une quelconque des revendications 1 à 11.
